# EUROPEAN PATENT APPLICATION

(11) **EP 4 836 404 A1**
(43) Date of publication of application: **04.11.2026**
(21) Application number: 25221597.5
(22) Date of filing: 08.12.2025
(51) Int. Cl.: H04N 19/124, H04N 19/14, H04N 19/149, H04N 19/176, H04N 19/59, H04N 19/147, H04N 19/172

(54) **VIDEO ENCODING WITH CONTENT ADAPTIVE RESOLUTION DECISION**

(30) Priority: 28.04.2025 US 202519191241
(71) Applicant: Intel Corporation, Santa Clara, CA 95054 (US)
(72) Inventor: ZHANG, Ximin, San Jose, CA 95129 (US); SUN, Minzhi, Bellevue, WA 98006 (US); CHIU, Yi-Jen, San Jose, CA 95129 (US)
(74) Representative: HGF

(57) **Abstract**

A single-pass encoding solution can be implemented to determine a suitable resolution for a target bitrate based on the characteristics of the content. One insight for determining the resolution for a target bitrate is to balance quantization-caused distortion and downscaling-caused distortion for a given video. If quantization-caused distortion is expected to be higher than the downscaling-caused distortion for a given video (e.g., such as a high complexity video), a lower resolution may be selected to encode the video for a target bitrate. If downscaling-caused distortion is expected to be higher than the quantization-caused distortion for a given video (e.g., such as a low complexity video), a higher resolution may be selected to encode the video for a target bitrate.

## Description

### Background

Video compression is a technique for making video files smaller and easier to transmit over the Internet. There are different methods and algorithms for video compression, with different performance and tradeoffs. Video compression involves encoding and decoding. Encoding is the process of transforming (uncompressed) video data into a compressed format. Decoding is the process of restoring video data from the compressed format. An encoder-decoder system is called a codec.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates an encoding system and a plurality of decoding systems, according to some embodiments of the disclosure.
FIG. 2 illustrates an exemplary encoder to encode video frames and output an encoded bitstream, according to some embodiments of the disclosure.
FIG. 3 illustrates an exemplary decoder to decode an encoded bitstream and output a decoded video, according to some embodiments of the disclosure.
FIG. 4 illustrates a video encoding Convex Hull curve, according to some embodiments of the disclosure.
FIG. 5 illustrates different adaptive bitrate ladders for different video streaming platforms, according to some embodiments of the disclosure.
FIG. 6 illustrates exemplary implementations of adaptive bitrate ladder determination, according to some embodiments of the disclosure.
FIG. 7 illustrates logic for determining an encoding resolution, according to some embodiments of the disclosure.
FIG. 8 illustrates feature extraction, according to some embodiments of the disclosure.
FIG. 9 illustrates switching quantization parameter (QP) estimation, according to some embodiments of the disclosure.
FIG. 10 illustrates encode QP estimation, according to some embodiments of the disclosure.
FIG. 11 illustrates training a neural network for switching QP estimation, according to some embodiments of the disclosure.
FIG. 12 illustrates training a neural network for encode QP estimation, according to some embodiments of the disclosure.
FIG. 13 is a flow diagram illustrating a method for determining a resolution for a target bitrate, according to some embodiments of the disclosure.
FIG. 14 depicts a block diagram of an exemplary computing device, according to some embodiments of the disclosure.

### Detailed Description

### Overview

Video coding or video compression is the process of compressing video data for storage, transmission, and playback. Video compression may involve taking a large amount of raw video data and applying one or more compression techniques to reduce the amount of data needed to represent the video while maintaining an acceptable level of visual quality. In some cases, video compression can offer efficient storage and transmission of video content over limited bandwidth networks.

A video includes one or more (temporal) sequences of video frames or frames. Frames having larger frame indices or which are associated with later timestamps relative to a current frame may be considered frames in the forward direction relative to the current frame. Frames having smaller frame indices or which are associated with previous timestamps relative to a current frame may be considered frames in the backward direction relative to the current frame. A frame may include an image, or a single still image. A frame may have millions of pixels. For example, a frame for an uncompressed 4K video may have a resolution of 3840x2160 pixels. Pixels may have luma/luminance and chroma/chrominance values. The terms "frame" and "picture" may be used interchangeably.

There are several frame types of picture types. I-frames or Intra-frames may be least compressible and do not depend on other frames to decode. I-frames may include scene change frames. An I-frame may be a reference frame for one or more other frames. P-frames may depend on data from previous frames to decode and may be more compressible than I-frames. A P-frame may be a reference frame for one or more other frames. B-frames may depend on data from previous and forward frames to decode and may be more compressible than I-frames and P-frames. A B-frame can refer to two or more frames, such as one frame in the future and one frame in the past. Other frame types may include reference B-frame and non-reference B-frame. Reference B-frame can act as a reference for another frame. A non-reference B-frame is not used as a reference for any frame. Reference B-frames are stored in a decoded picture buffer whereas a non-reference B-frame does not need to be stored in the decoded picture buffer. P-frames and B-frames may be referred to as Inter-frames. The order or encoding hierarchy in which I-frames, P-frames, and B-frames are arranged may be referred to as a group of pictures (GOP). In some cases, a frame may be an instantaneous decoder refresh (IDR) frame within a GOP. An IDR-frame can indicate that no frame after the IDR-frame can reference any frame before the IDR-frame. Therefore, an IDR-frame may signal to a decoder that the decoder may clear the decoded picture buffer. Every IDR-frame may be an I-frame, but an I-frame may or may not be an IDR-frame. A closed GOP may begin with an IDR-frame. A slice may be a spatially distinct region of a frame that is encoded separately from any other region in the same frame.

In some cases, a frame may be partitioned into one or more blocks. Blocks may be used for block-based compression. The blocks of pixels resulting from partitioning may be referred to as partitions. Blocks may have sizes which are much smaller, such as 512x512 pixels, 256x256 pixels, 128x128 pixels, 64x64 pixels, 32x32 pixels, 16x16pixels, 8x8 pixels, 4x4 pixels, etc. A block may include a square or rectangular region of a frame. Various video compression techniques may use different terminology for the blocks or different partitioning structures for creating the blocks. In some video compression techniques, a frame may be partitioned into Coding Tree Units (CTUs) or macroblocks. A CTU can be 32x32 pixels, 64x64 pixels, 128x128 pixels, or larger in size. A macroblock can be between 8x8 pixels and 16x16 pixels in size. A CTU or macroblock may be divided (separately for luma and chroma components) into coding units (CUs) or smaller blocks, e.g., according to a tree structure. A CU, or a smaller block can have a size of 64x64 pixels, 32x32 pixels, 16x16 pixels, 8x8 pixels, or 4x4 pixels.

Video streaming is pervasive in the daily lives of people all over the world. Video streaming platforms are used by billions of people each day. To reduce bandwidth usage while providing a good quality of experience, Adaptive Bitrate Streaming (ABR) has been widely implemented by video streaming platforms. ABR is a technology that adjusts streaming content in real-time to provide the best quality for each viewer. ABR streaming considers network conditions, screen size, and device capabilities, and adapts on the fly to changes in available bandwidth and device resources. To prepare video content for ABR streaming, the video content is encoded at various bitrates and resolutions to produce different versions of the video content. The different bitrates (or bitrate ranges) and corresponding resolutions are referred to as the ABR ladder. A video is divided into smaller segments, allowing the streaming client or video player to select and stream the version of a segment (e.g., encoded according to a resolution for a given bitrate) that has the optimal video quality for the current network connection and the capabilities of the video client. By implementing ABR streaming, smooth playback can be provided for all viewers, whether they are mobile users or watching on 4K televisions at home.

Video bitrate refers to the amount of data processed per second in a video stream, typically measured in bits per second (bps). Bitrate significantly impacts the quality and size of the video. Higher bitrates generally result in better video quality because more data is being transmitted, but they also require more bandwidth and storage space.

Video resolutions vary widely, each serving different purposes and offering distinct levels of visual quality. Standard Definition (SD), typically 480p, is the most basic and was widely used before the advent of high definition content. High Definition (HD), at 720p, offers better clarity and is common for streaming and online videos. Full HD (1080p) provides even sharper images and is used for many streaming services. Quad HD (QHD) or 2K resolution, at 1440p, is often used for gaming monitors and high-end smartphones. Ultra High Definition (UHD) or 4K resolution, at 2160p, delivers stunning detail and is becoming the norm for modern TVs and some streaming platforms. Finally, 8K resolution, at 4320p, offers the highest level of detail currently available, though it requires significant processing power and is mainly used in professional and high-end consumer applications.

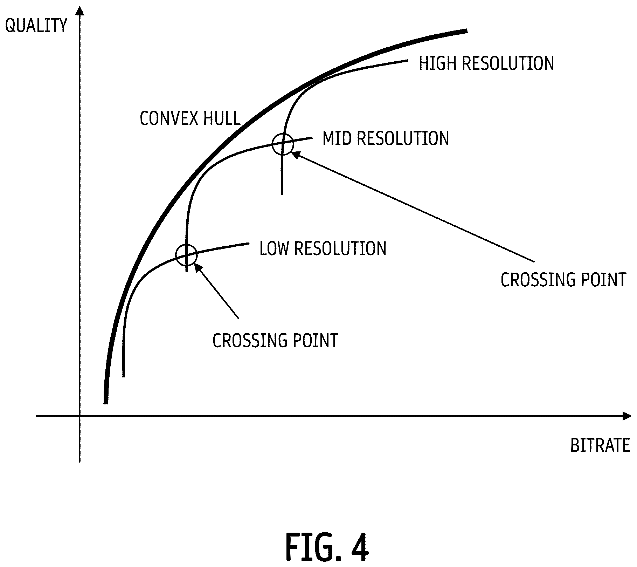

The ideal adaptive bitrate ladder for each video is understood to form a smooth Convex Hull curve when plotting quality vs bitrate and resolutions, as seen in FIG. 4. Given a certain encoder, the Convex Hull curve theoretically represents the best encoding efficiency by adaptively encoding different resolutions for different bitrate ranges. One streaming platform implements brute force encoding of video content at different resolutions and quality levels to find the Convex Hull curve (e.g., the theoretical best encoding efficiency) and determine the ABR ladder based on the Convex Hull curve. Specifically, in the brute force approach, the crossing points of the Rate-Distortion (RD) curves corresponding to different resolutions (e.g., low resolution RD curve, mid resolution RD curve, high resolution RD curve) are identified. Based on the crossing points, encoding resolution is switched to increase or decrease quality for different bitrate ranges. Although the brute force approach can provide near theoretical optimal quality, the brute force approach has high computational complexity, which prevents its usage and is not possible to use at all for online/live content.

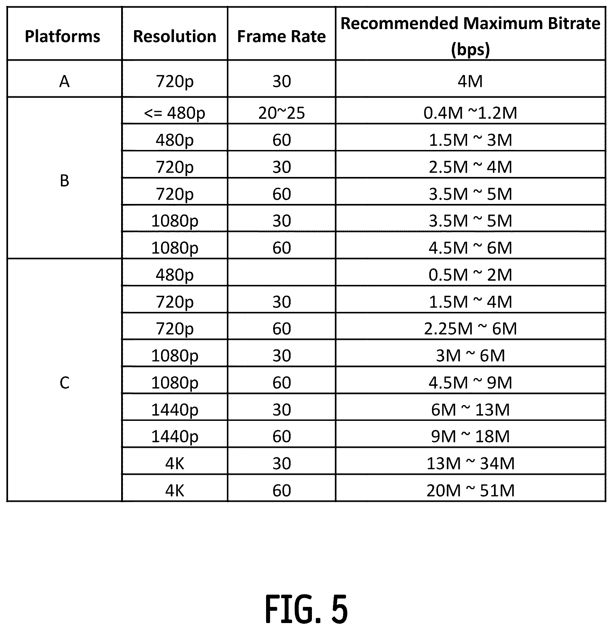

Most streaming platforms opt to use a fixed bitrate ladder for all types of content. Exemplary bitrate ladders for several video streaming platforms are shown in FIG. 5. As seen in the exemplary bitrate ladders, high target bitrate uses high resolution and low target bitrate uses low resolution. The fixed bitrate ladder solution cannot achieve optimal quality. The fixed ladder bitrate is too low for high complexity video (e.g., high spatial/temporal variations). The ladder forces the encoder to use a high QP (e.g., higher amount of quantization) to meet the target bitrate in high resolution and can cause encoding artifacts as a result. For high complexity video, low resolution encoding can achieve better subjective quality with same bitrate. On the other hand, the fixed ladder bitrate is too high for low complexity video (e.g., low spatial/temporal variations). The ladder forces the encoder to use a low QP (e.g., a smaller amount of quantization) to meet the target bitrate in low resolution and the blurring caused by downsampling/downscaling cannot be recovered. For low complexity video, high resolution encoding can achieve better subjective quality with same bitrate.

One or more of these issues can be addressed by a single-pass encoding solution to determine a suitable resolution for a target bitrate based on the characteristics of the content. During the encoding process, distortion caused by quantization is a reason for subjective quality loss. High quantization can cause higher distortion. If the video is downscaled first and encoded at the same bitrate, lower quantization value would be used. The distortion caused by quantization would be lower. The downscaling can cause distortion too. One insight for determining the resolution for a target bitrate is to balance quantization-caused distortion and downscaling-caused distortion for a given video. In other words, the objective is to find when the additional distortion caused by higher quantization would be higher than the distortion caused by downscaling. Quantization and downscaling can impact the encoding of a video differently, depending on the characteristics and complexity level of the video. If quantization-caused distortion is expected to be higher than the downscaling-caused distortion for a given video (e.g., such as a high complexity video), a lower resolution may be selected to encode the video for a target bitrate. If downscaling-caused distortion is expected to be higher than the quantization-caused distortion for a given video (e.g., such as a low complexity video), a higher resolution may be selected to encode the video for a target bitrate.

Based on this insight, ABR ladder can be determined using a content adaptive resolution decision approach. The decision approach can be applied individually to one or more target bitrates or bitrate ranges. The cost/distortion caused by quantization of a video at a given target bitrate can be estimated. A further distortion caused by downscaling of the video can be estimated. The distortion associated with quantization is compared to the further distortion associated with downscaling. Based on the comparing of the distortion and the further distortion, a suitable resolution for encoding the video at the target bitrate can be determined.

In some embodiments, a machine learning based approach can be implemented to form one or more of: the estimated distortion associated with quantization and the estimated distortion caused by downscaling. Decision logic can be implemented to determine an optimal encoding resolution for a given video segment based on the estimated distortions.

In some embodiments, a group of spatial sharpness and variance features are extracted and used as the inputs to a machine learning model to estimate a switching encoding QP between two different resolutions. The switching encoding QP can represent the theoretical optimal crossing point where resolution is changed from one resolution to another resolution relative to the Convex Hull curve. The switching encoding QP is used as an indicator/estimator/proxy for the cost/distortion associated with downsampling or the cost/distortion associated with changing from a high resolution to a lower resolution.

In some embodiments, one or more lookahead statistics are extracted and used with the target bitrate as the inputs to a machine learning model to estimate the (average/characteristic) encode QP for a video segment at the target bitrate. In some embodiments, if lookahead analysis is not available, the (average/characteristic) encoded QP of one or more past frames is used as the encode QP. The encode QP can represent the theoretical optimal amount of quantization to encode the content at the target bitrate. The encode QP is used as an indicator/estimator/proxy for the cost/distortion associated with quantization.

By comparing the estimated distortion associated with quantization (e.g., the encode QP) and the estimated distortion associated with downscaling (e.g., the switching QP), a decision logic can be implemented to decide the optimal resolution for encoding the video at the target bitrate.

The methods described herein represent a single-pass encoding solution that can adaptively decide the video encoding resolution and avoid the need to implement a complex optimization approach for determining the ABR ladder. The decision complexity is significantly lower than the brute force approach. Moreover, the single-pass encoding solution means that a near optimal resolution decision can be made with content analysis on the fly, thereby making it possible to determine the ABR ladder for online/live content. At the same time, encoded bitstreams with high encoding efficiency (achieving sufficiently high quality for a given bitrate) can be generated.

In some experiments, the single-pass approach for determining the optimal resolution for encoding a video can either achieve obvious subjective quality improvement with same bitrate or use significant less bits with good enough visual quality.

Content adaptive resolution decision techniques described and illustrated herein may be applied to a variety of codecs, such as AVC (Advanced Video Coding), HEVC (High Efficiency Video Coding), AV1 (AOMedia Video 1), AV2 (AOMedia Video 2), VVC (Versatile Video Coding), and VP9. AVC, also known as "ITU-T H.264", was approved in 2003 and last revised on 2024-08-13. HEVC, also known as "ITU-T H.265", was approved in 2013 and last revised on 2024-04-03. AV1 is a video coding codec designed for video transmissions over the Internet. "AV1 Bitstream & Decoding Process Specification" version 1.1.1 with Errata was last modified in 2019. AV2 is in development. VVC, also known as "ITU-T H.266", was finalized in 2020 and last revised on 2023-09-29. VP9 is an open video codec which became available on 2013-06-17 and is last revised in October 2023.

### Video compression

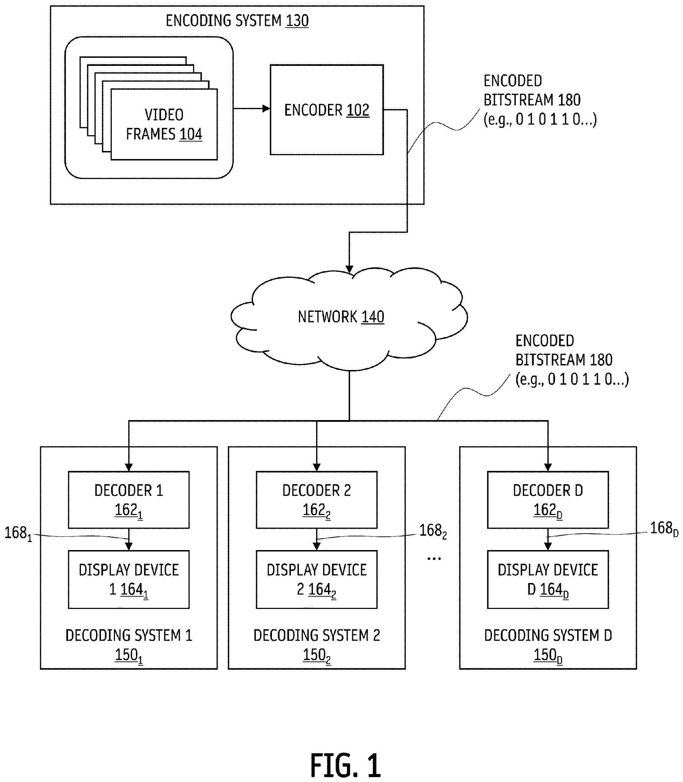

FIG. 1 illustrates encoding system 130 and one or more decoding systems 150_{1..D}, according to some embodiments of the disclosure.

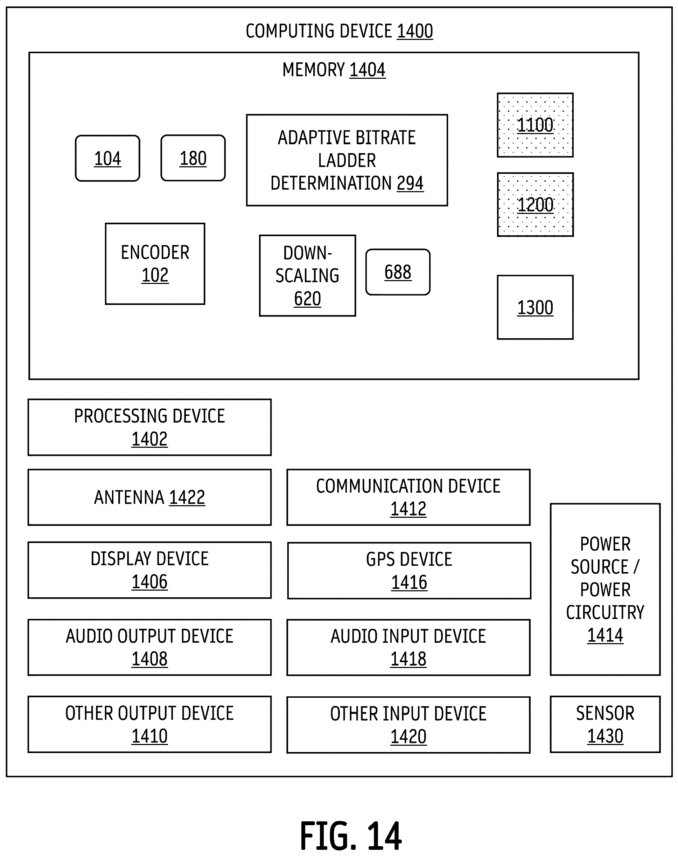

Encoding system 130 may be implemented on computing device 1400 of FIG. 14. Encoding system 130 can be implemented in the cloud or in a data center. Encoding system 130 can be implemented on a device that is used to capture the video. Encoding system 130 can be implemented on a standalone computing system. Encoding system 130 may perform the process of encoding in video compression. Encoding system 130 may receive a video (e.g., uncompressed video, original video, raw video, etc.) comprising a sequence of video frames 104. The video frames 104 may include image frames or images that make up the video. A video may have a frame rate or number of frames per second (FPS), that defines the number of frames per second of video. The higher the FPS, the more realistic and fluid the video looks. Typically, FPS is greater than 24 frames per second for a natural, realistic viewing experience to a human viewer. Examples of video may include a television episode, a movie, a short film, a short video (e.g., less than 15 seconds long), a video capturing gaming experience, computer-screen content, video conferencing content, live event broadcast content, sports content, a surveillance video, a video shot using a mobile computing device (e.g., a smartphone), etc. In some cases, video may include a mix or combination of different types of video.

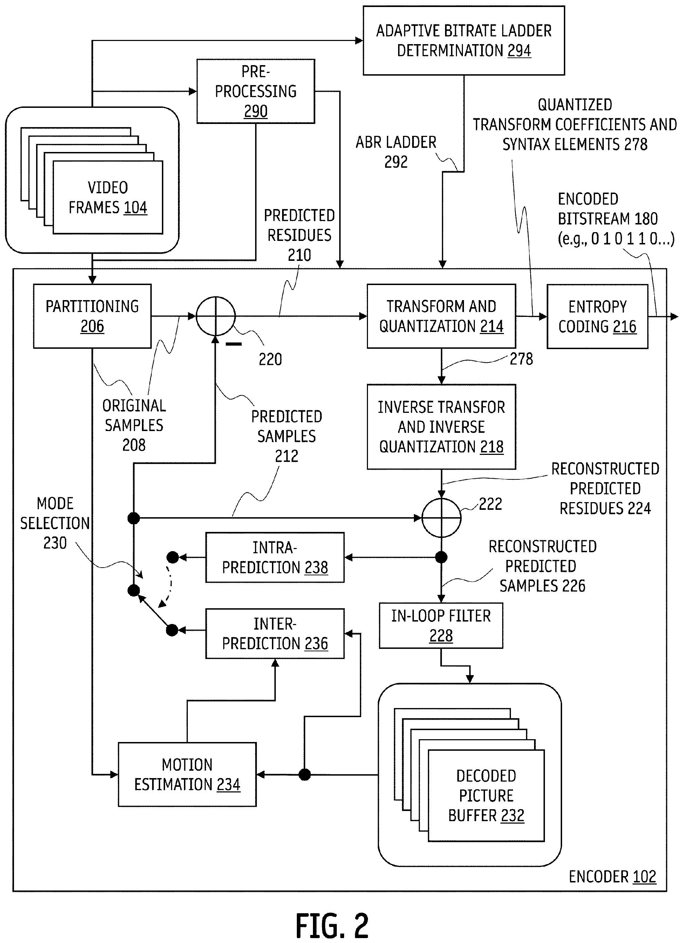

Encoding system 130 may include encoder 102 that receives video frames 104 and encodes video frames 104 into encoded bitstream 180. An exemplary implementation of encoder 102 is illustrated in FIG. 2.

Encoded bitstream 180 may be compressed, meaning that encoded bitstream 180 may be smaller in size than video frames 104. Encoded bitstream 180 may include a series of bits, e.g., having 0's and 1's. Encoded bitstream 180 may have header information, payload information, and footer information, which may be encoded as bits in the bitstream. Header information may provide information about one or more of: the format of encoded bitstream 180, the encoding process implemented in encoder 102, the parameters of encoder 102, and metadata of encoded bitstream 180. For example, header information may include one or more of: resolution information, frame rate, aspect ratio, color space, etc. Payload information may include data representing content of video frames 104, such as samples frames, symbols, syntax elements, etc. For example, payload information may include bits that encode one or more of motion predictors, transform coefficients, prediction modes, and quantization levels of video frames 104. Footer information may indicate an end of the encoded bitstream 180. Footer information may include other information including one or more of: checksums, error correction codes, and signatures. Format of encoded bitstream 180 may vary depending on the specification of the encoding and decoding process, i.e., the codec.

Encoded bitstream 180 may include packets, where encoded video data and signaling information may be packetized. One exemplary format is the Open Bitstream Unit (OBU), which is used in AV1 encoded bitstreams. An OBU may include a header and a payload. The header can include information about the OBU, such as information that indicates the type of OBU. Examples of OBU types may include sequence header OBU, frame header OBU, metadata OBU, temporal delimiter OBU, and tile group OBU. Payloads in OBUs may carry quantized transform coefficients and syntax elements that may be used in the decoder to properly decode the encoded video data to regenerate video frames.

Encoded bitstream 180 may be transmitted to one or more decoding systems 150_{1...D}, via network 140. Network 140 may be the Internet. Network 140 may include one or more of: cellular data networks, wireless data networks, wired data networks, cable Internet networks, fiber optic networks, satellite Internet networks, etc.

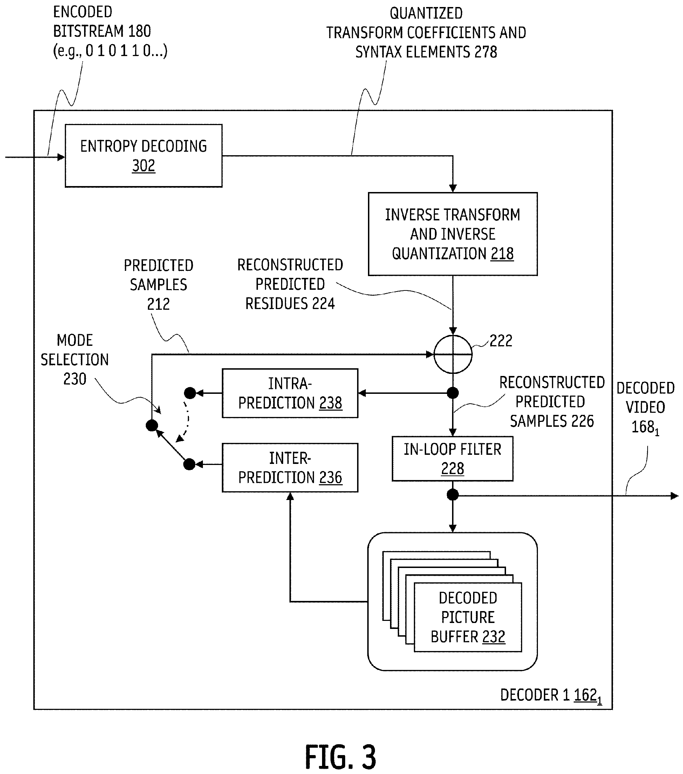

D number of decoding systems 150_{1...D} are illustrated. At least one of the decoding systems 150_{1...D} may be implemented on computing device 1400 of FIG. 14. Examples of systems 150_{1...D} may include personal computers, mobile computing devices, gaming devices, augmented reality devices, mixed reality devices, virtual reality devices, televisions, etc. Each one of decoding systems 150_{1...D} may perform the process of decoding in video compression. Each one of decoding systems 150_{1...D} may include a decoder (e.g., decoder 1...D 162_{1...D}), and one or more display devices (e.g., display device 1...D 164_{1...D}). An exemplary implementation of a decoder, e.g., decoder 1 162₁, is illustrated in FIG. 3.

For example, decoding system 1 150₁, may include decoder 1 162₁ and a display device 1 164₁. Decoder 1 162₁ may implement a decoding process of video compression. Decoder 1 162₁ may receive encoded bitstream 180 and produce decoded video 168₁. Decoded video 168₁ may include a series of video frames, which may be a version or reconstructed version of video frames 104 encoded by encoding system 130. Display device 1 164₁ may output the decoded video 168₁ for display to one or more human viewers or users of decoding system 1 150₁.

For example, decoding system 2 150₂, may include decoder 2 162₂ and a display device 2 164₂. Decoder 2 162₂ may implement a decoding process of video compression. Decoder 2 162₂ may receive encoded bitstream 180 and produce decoded video 168₂. Decoded video 168₂ may include a series of video frames, which may be a version or reconstructed version of video frames 104 encoded by encoding system 130. Display device 2 164₂ may output the decoded video 168₂ for display to one or more human viewers or users of decoding system 2 150₂.

For example, decoding system D 150_{D}, may include decoder D 162_{D} and a display device D 164_{D}. Decoder D 162_{D} may implement a decoding process of video compression. Decoder D 162_{D} may receive encoded bitstream 180 and produce decoded video 168_{D}. Decoded video 168_{D} may include a series of video frames, which may be a version or reconstructed version of video frames 104 encoded by encoding system 130. Display device D 164_{D} may output the decoded video 168_{D} for display to one or more human viewers or users of decoding system D 150_{D}.

### Video encoder

FIG. 2 illustrates encoder 102 to encode video frames 104 and output an encoded bitstream, according to some embodiments of the disclosure. Encoder 102 may include one or more of: signal processing operations and data processing operations, including Inter and Intra-prediction, transform, quantization, in-loop filtering, and entropy coding. Encoder 102 may include a reconstruction loop involving inverse quantization, and inverse transformation to guarantee that the decoder would see the same reference blocks and frames. Encoder 102 may receive video frames 104 and encode video frames 104 into encoded bitstream 180. Encoder 102 may include one or more of partitioning 206, transform and quantization 214, inverse transform and inverse quantization 218, in-loop filter 228, motion estimation 234, Inter-prediction 236, Intra-prediction 238, and entropy coding 216.

In some embodiments, video frames 104 may be processed by adaptive bitrate ladder determination 294 to determine one or more bitrates or bitrate ranges, and corresponding resolutions for the bitrates or bitrate ranges to be used in encoding video frames 104. Adaptive bitrate ladder determination 294 may determine ABR ladder 292, which includes one or more bitrates or bitrate ranges and one or more corresponding encoding resolutions. ABR ladder 292 is used to instruct encoder 102 to perform encoding of video frames at a particular resolution for a particular target bitrate or target bitrate range. The one or more bitrates or bitrate ranges may be determined or set by the application, e.g., streaming platform. One or more corresponding encoding resolutions may include one or more of: 8K, 4K, 2K, Full HD, HD, and SD.

In some embodiments, video frames 104 may be processed by pre-processing 290 before encoder 102 applies an encoding process. Pre-processing 290 and encoder 102 may form encoding system 130 as seen in FIG. 1. Pre-processing 290 may analyze video frames 104 to determine picture statistics that may be used to inform one or more encoding processes to be performed by one or more components in encoder 102. Pre-processing 290 may determine information that may be used for quantization (QP) adaptation, scene cut detection, and frame type adaptation. Pre-processing 290 may determine for each frame, a recommended frame type. Pre-processing 290 may apply motion compensated temporal filtering (MCTF) to denoise video frames 104. Filtered versions of video frames 104 with MCTF applied may be provided to encoder 102 as the input video frames (instead of video frames 104), e.g., to partitioning 206. MCTF may include a motion estimation analysis operation and a bilateral filtering operation. MCTF may attenuate random picture components in a motion aware fashion to improve coding efficiency. MCTF may operate on blocks of 8x8 pixels, or 16x16 pixels. MCTF may operate separately on luminance values and chroma values. MCTF may be applied in three dimensions (e.g., spatial directions and a temporal direction). MCTF may produce a noise estimate of various blocks. In some embodiments, one or more operations of pre-processing 290 may be implemented as software instructions being executed by a processor. In some embodiments, one or more operations of pre-processing 290 may be implemented using computing circuitry designed to perform the one or more operations in hardware.

Partitioning 206 may divide a frame in video frames 104 (or filtered version of video frames 104 from pre-processing 290) into blocks of pixels. Different codecs may allow different variable range of block sizes. In one codec, a frame may be partitioned by partitioning 206 into blocks of size 128x128 or 64x64 pixels. In some cases, a frame may be partitioned by partitioning 206 into blocks of 256x256 or 512x512 pixels. In some cases, a frame may be partitioned by partitioning 206 into blocks of 32x32 or 16x16 pixels. Large blocks may be referred to as superblocks, macroblocks, or CTUs. Partitioning 206 may further divide each large block using a multi-way partition tree structure. In some cases, a partition of a superblock can be recursively divided further by partitioning 206 using the multi-way partition tree structure (e.g., down to 4x4 size blocks/partitions). In another codec, a frame may be partitioned by partitioning 206 into CTUs of size 128x128 pixels. Partitioning 206 may divide a CTU using a quadtree partitioning structure into four CUs. Partitioning 206 may further recursively divide a CU using the quadtree partitioning structure. Partitioning 206 may (further) subdivide a CU using a multi-type tree structure (e.g., a quadtree, a binary tree, or ternary tree structure). A smallest CU may have a size of 4x4 pixels. A CU may be referred to herein as a block or a partition. Partitioning 206 may output original samples 208, e.g., as blocks of pixels, or partitions.

In some cases, one or more operations in partitioning 206 may be implemented in Intra-prediction 238 and/or Inter-prediction 236.

Intra-prediction 238 may predict samples of a block or partition from reconstructed predicted samples of previously encoded spatial neighboring/reference blocks of the same frame. Intra-prediction 238 may receive reconstructed predicted samples 226 (of previously encoded spatial neighbor blocks of the same frame). Reconstructed predicted samples 226 may be generated by summer 222 from reconstructed predicted residues 224 and predicted samples 212. Intra-prediction 238 may determine a suitable predictor for predicting the samples from reconstructed predicted samples of previously encoded spatial neighboring/reference blocks of the same frame (thus making an Intra-prediction decision). Intra-prediction 238 may generate predicted samples 212 generated using the suitable predictor. Intra-prediction 238 may output or identify the neighboring/reference block and a predictor used in generating the predicted samples 212. The identified neighboring/reference block and predictor may be encoded in the encoded bitstream 180 to enable a decoder to reconstruct a block using the same neighboring/reference block and predictor. In one codec, Intra-prediction 238 may support a number of diverse predictors, e.g., 56 different predictors. In one codec, Intra-prediction 238 may support a number of diverse predictors, e.g., 95 different predictors. Some predictors, e.g., directional predictors, may capture different spatial redundancies in directional textures. Pixel values of a block can be predicted using a directional predictor in Intra-prediction 238 by extrapolating pixel values of a neighboring/reference block along a certain direction. Intra-prediction 238 of different codecs may support different sets of predictors to exploit different spatial patterns within the same frame. Examples of predictors may include direct current (DC), planar, Paeth, smooth, smooth vertical, smooth horizontal, recursive-based filtering modes, chroma-from-luma, IBC, color palette or palette coding, multiple-reference line, Intra sub-partition, matrix-based Intra-prediction (matrix coefficients may be defined by offline training using neural networks), angular prediction, wide-angle prediction, cross-component linear model, template matching, etc. IBC works by copying a reference block within the same frame to predict a current block. Palette coding or palette mode works by using a color palette having a few colors (e.g., 2-8 colors), and encoding a current block using indices to the color palette. In some cases, Intra-prediction 238 may perform block-prediction, where a predicted block may be produced from a reconstructed neighboring/reference block of the same frame using a vector. Optionally, an interpolation filter of a certain type may be applied to the predicted block to blend pixels of the predicted block. Pixel values of a block can be predicted using a vector compensation process in Intra-prediction 238 by translating a neighboring/reference block (within the same frame) according to the vector (and optionally applying an interpolation filter to the neighboring/reference block) to produce predicted samples 212. Intra-prediction 238 may output or identify the vector applied in generating predicted samples 212. In some codecs, Intra-prediction 238 may encode (1) a residual vector generated from the applied vector and a vector predictor candidate, and (2) information that identifies the vector predictor candidate, rather than encoding the applied vector itself. Intra-prediction 238 may output or identify an interpolation filter type applied in generating predicted samples 212.

Motion estimation 234 and Inter-prediction 236 may predict samples of a block from samples of previously encoded frames, e.g., reference frames in decoded picture buffer 232. Motion estimation 234 and Inter-prediction 236 may perform operations to make Inter-prediction decisions. Motion estimation 234 may perform motion analysis and determine motion information for a current frame. Motion estimation 234 may determine a motion field for a current frame. A motion field may include motion vectors for blocks of a current frame. Motion estimation 234 may determine an average magnitude of motion vectors of a current frame. Motion estimation 234 may determine motion information, which may indicate how much motion is present in a current frame (e.g., large motion, very dynamic motion, small/little motion, very static).

Motion estimation 234 and Inter-prediction 236 may perform motion compensation, which may involve identifying a suitable reference block and a suitable motion predictor (or motion vector predictor) for a block and optionally an interpolation filter to be applied to the reference block. Motion estimation 234 may receive original samples 208 from partitioning 206. Motion estimation 234 may receive samples from decoded picture buffer 232 (e.g., samples of previously encoded frames or reference frames). Motion estimation 234 may use a number of reference frames for determining one or more suitable motion predictors. A motion predictor may include a reference block and a motion vector that can be applied to generate a motion compensated block or predicted block. Motion predictors may include motion vectors that capture the movement of blocks between frames in a video. Motion estimation 234 may output or identify one or more reference frames and one or more suitable motion predictors. Inter-prediction 236 may apply the one or more suitable motion predictors determined in motion estimation 234 and one or more reference frames to generate predicted samples 212. The identified reference frame(s) and motion predictor(s) may be encoded in the encoded bitstream 180 to enable a decoder to reconstruct a block using the same reference frame(s) and motion predictor(s). In one codec, motion estimation 234 may implement single reference frame prediction mode, where a single reference frame with a corresponding motion predictor is used for Inter-prediction 236. Motion estimation 234 may implement compound reference frame prediction mode where two reference frames with two corresponding motion predictors are used for Inter-prediction 236. In one codec, motion estimation 234 may implement techniques for searching and identifying good reference frame(s) that can yield the most efficient motion predictor. The techniques in motion estimation 234 may include searching for good reference frame(s) candidates spatially (within the same frame) and temporally (in previously encoded frames). The techniques in motion estimation 234 may include searching a deep spatial neighborhood to find a spatial candidate pool. The techniques in motion estimation 234 may include utilizing temporal motion field estimation mechanisms to generate a temporal candidate pool. The techniques in motion estimation 234 may use a motion field estimation process. After temporal and spatial candidates may be ranked and a suitable motion predictor may be determined. **In** one codec, Inter-prediction 236 may support a number of diverse motion predictors. Examples of predictors may include geometric motion vectors (complex, non-linear motion), warped motion compensation (affine transformations that capture non-translational object movements), overlapped block motion compensation, advanced compound prediction (compound wedge prediction, difference-modulated masked prediction, frame distance-based compound prediction, and compound Inter-Intra-prediction), dynamic spatial and temporal motion vector referencing, affine motion compensation (capturing higher-order motion such as rotation, scaling, and sheering), adaptive motion vector resolution modes, geometric partitioning modes, bidirectional optical flow, prediction refinement with optical flow, biprediction with weights, extended merge prediction, etc. Optionally, an interpolation filter of a certain type may be applied to the predicted block to blend pixels of the predicted block. Pixel values of a block can be predicted using the motion predictor/vector determined in a motion compensation process in motion estimation 234 and Inter-prediction 236 and optionally applying an interpolation filter. In some cases, Inter-prediction 236 may perform motion compensation, where a predicted block may be produced from a reconstructed reference block of a reference frame using the motion predictor/vector. Inter-prediction 236 may output or identify the motion predictor/vector applied in generating predicted samples 212. In some codecs, Inter-prediction 236 may encode (1) a residual vector generated from the applied vector and a vector predictor candidate, and (2) information that identifies the vector predictor candidate, rather than encoding the applied vector itself. Inter-prediction 236 may output or identify an interpolation filter type applied in generating predicted samples 212.

Mode selection 230 may be informed by components such as motion estimation 234 to determine whether Inter-prediction 236 or Intra-prediction 238 may be more efficient for encoding a block (thus making an encoding decision). Inter-prediction 236 may output predicted samples 212 of a predicted block. Inter-prediction 236 may output a selected predictor and a selected interpolation filter (if applicable) that may be used to generate the predicted block. Intra-prediction 238 may output predicted samples 212 of a predicted block. Intra-prediction 238 may output a selected predictor and a selected interpolation filter (if applicable) that may be used to generate the predicted block. Regardless of the mode, predicted residues 210 may be generated by subtractor 220 by subtracting original samples 208 by predicted samples 212. In some cases, predicted residues 210 may include residual vectors from Inter-prediction 236 and/or Intra-prediction 238.

Transform and quantization 214 may receive predicted residues 210. Predicted residues 210 may be generated by subtractor 220 that takes original samples 208 and subtracts predicted samples 212 to output predicted residues 210. Predicted residues 210 may be referred to as prediction error of the Intra-prediction 238 and Inter-prediction 236 (e.g., error between the original samples and predicted samples 212). Prediction error has a smaller range of values than the original samples and can be coded with fewer bits in encoded bitstream 180. Transform and quantization 214 may include one or more of transforming and quantizing. Transforming may include converting the predicted residues 210 from the spatial domain to the frequency domain. Transforming may include applying one or more transform kernels. Examples of transform kernels may include horizontal and vertical forms of discrete cosine transform (DCT), asymmetrical discrete sine transform (ADST), flip ADST, and identity transform (IDTX), multiple transform selection, low-frequency non-separatable transform, subblock transform, non-square transforms, DCT-VIII, discrete sine transform VII (DST-VII), discrete wavelet transform (DWT), etc. Transforming may convert the predicted residues 210 into transform coefficients. Quantizing may quantize the transformed coefficients, e.g., by reducing the precision of the transform coefficients. Quantizing may include using quantization matrices (e.g., linear and non-linear quantization matrices) having quantization parameters or quantization step sizes. The elements in the quantization matrix can be larger for higher frequency bands and smaller for lower frequency bands, which means that the higher frequency coefficients are more coarsely quantized, and the lower frequency coefficients are more finely quantized. Quantizing may include dividing each transform coefficient by a corresponding element (e.g., a quantization parameter) in the quantization matrix and rounding to the nearest integer. Effectively, the quantization matrices may implement different QPs for different frequency bands and chroma planes and can use spatial prediction. A suitable quantization matrix can be selected and signaled for each frame and encoded in encoded bitstream 180. Transform and quantization 214 may output quantized transform coefficients and syntax elements 278 that indicate the coding modes and parameters used in the encoding process implemented in encoder 102.

Herein, a QP refers to a parameter in video encoding that controls the level of compression by determining how much detail is preserved or discarded during the encoding process. QP is directly associated with quantization step size. Larger step size may result in higher loss in information but smaller file sizes. Smaller step size may result in better preservation of information but larger file sizes. QPs can have values from 0 to 51. Lower QP values, ranging from 0 to 20, result in minimal compression, preserving more detail and quality in the video, but they also lead to larger file sizes. Midrange QP values, between 21 and 35, strike a balance between video quality and file size, offering moderate compression that is suitable for most streaming applications where a balance between quality and bandwidth usage is needed. Higher QP values, from 36 to 51, apply more compression, leading to noticeable quality loss, but they significantly reduce file sizes, which is useful for low-bandwidth scenarios. The exact range and impact of QP values can vary depending on the specific encoding standard and the encoder settings. The QP value directly influences how the DCT coefficients are divided and rounded in transform and quantization 214. Larger QP values cause more aggressive rounding, effectively removing high frequency details that are less perceptible to human vision. This parameter is used in the Rate-Distortion optimization process of the encoder, allowing encoders to balance visual quality against bandwidth constraints. Modern encoders can dynamically adjust QP values at both frame and macroblock levels to optimize compression based on scene complexity and motion. In some cases, the adjustment to the QP is made to a base QP using a delta QP or a QP offset. Delta QP (or QP offset) is a mechanism in video encoding that allows for relative adjustments to the base QP value for specific coding units or frame types. These offsets enable transform and quantization 214 to apply different levels of compression to different parts of the video stream, optimizing the balance between quality and bitrate. For example, B-frames typically use higher QP values (positive delta) compared to I-frames since they're less critical for overall quality, while regions of high visual importance might receive negative delta QPs to preserve more detail. **In** many encoders, delta QPs can be configured for various structural elements like slice types, hierarchical coding layers, or specific regions of interest within frames. This granular control over quantization helps achieve better subjective quality by allocating more bits to visually significant content while maintaining efficient compression for less noticeable areas.

**In** some embodiments, the QPs used by transform and quantization 214 are determined by pre-processing 290. Pre-processing 290 may produce one or more quantization parameters to be used by transform and quantization 214.

Inverse transform and inverse quantization 218 may apply the inverse operations performed in transform and quantization 214 to produce reconstructed predicted residues 224 as part of a reconstruction path to produce decoded picture buffer 232 for encoder 102. Inverse transform and inverse quantization 218 may receive quantized transform coefficients and syntax elements 278. Inverse transform and inverse quantization 218 may perform one or more inverse quantization operations, e.g., applying an inverse quantization matrix, to obtain the unquantized/original transform coefficients. Inverse transform and inverse quantization 218 may perform one or more inverse transform operations, e.g., inverse transform (e.g., inverse DCT, inverse DWT, etc.), to obtain reconstructed predicted residues 224. A reconstruction path is provided in encoder 102 to generate reference blocks and frames, which are stored in decoded picture buffer 232. The reference blocks and frames may match the blocks and frames to be generated in the decoder. The reference blocks and frames are used as reference blocks and frames by motion estimation 234, Inter-prediction 236, and Intra-prediction 238.

In-loop filter 228 may implement filters to smooth out artifacts introduced by the encoding process in encoder 102 (e.g., processing performed by partitioning 206 and transform and quantization 214). In-loop filter 228 may receive reconstructed predicted samples 226 from summer 222 and output frames to decoded picture buffer 232. Examples of in-loop filters may include constrained low-pass filter, directional deringing filter, edge-directed conditional replacement filter, loop restoration filter, Wiener filter, self-guided restoration filters, constrained directional enhancement filter (CDEF), LMCS filter, Sample Adaptive Offset (SAO) filter, Adaptive Loop Filter (ALF), cross-component ALF, low-pass filter, deblocking filter, etc. For example, applying a deblocking filter across a boundary between two blocks can resolve blocky artifacts caused by the Gibbs phenomenon. In some embodiments, in-loop filter 228 may fetch data from a frame buffer having reconstructed predicted samples 226 of various blocks of a video frame. In-loop filter 228 may determine whether to apply an in-loop filter or not. In-loop filter 228 may determine one or more suitable filters that achieve good visual quality and/or one or more suitable filters that suitably remove the artifacts introduced by the encoding process in encoder 102. In-loop filter 228 may determine a type of an in-loop filter to apply across a boundary between two blocks. In-loop filter 228 may determine one or more strengths of an in-loop filter (e.g., filter coefficients) to apply across a boundary between two blocks based on the reconstructed predicted samples 226 of the two blocks. In some cases, in-loop filter 228 may take a desired bitrate into account when determining one or more suitable filters. In some cases, in-loop filter 228 may take a specified QP into account when determining one or more suitable filters. In-loop filter 228 may apply one or more (suitable) filters across a boundary that separates two blocks. After applying the one or more (suitable) filters, in-loop filter 228 may write (filtered) reconstructed samples to a frame buffer such as decoded picture buffer 232.

Entropy coding 216 may receive quantized transform coefficients and syntax elements 278 (e.g., referred to herein as symbols) and perform entropy coding. Entropy coding 216 may generate and output encoded bitstream 180. Entropy coding 216 may exploit statistical redundancy and apply lossless algorithms to encode the symbols and produce a compressed bitstream, e.g., encoded bitstream 180. Entropy coding 216 may implement some version of arithmetic coding. Different versions may have different pros and cons. In one codec, entropy coding 216 may implement (symbol to symbol) adaptive multi-symbol arithmetic coding. In another codec, entropy coding 216 may implement context-based adaptive binary arithmetic coder (CABAC). Binary arithmetic coding differs from multi-symbol arithmetic coding. Binary arithmetic coding encodes only a bit at a time, e.g., having either a binary value of 0 or 1. Binary arithmetic coding may first convert each symbol into a binary representation (e.g., using a fixed number of bits per-symbol). Handling just binary value of 0 or 1 can simplify computation and reduce complexity. Binary arithmetic coding may assign a probability to each binary value (e.g., a chance of the bit having a binary value of 0 and a chance of the bit having a binary value of 1). Multi-symbol arithmetic coding performs encoding for an alphabet having at least two or three symbol values and assigns a probability to each symbol value in the alphabet. Multi-symbol arithmetic coding can encode more bits at a time, which may result in a fewer number of operations for encoding the same amount of data. Multi-symbol arithmetic coding can require more computation and storage (since probability estimates may be updated for every element in the alphabet). Maintaining and updating probabilities (e.g., cumulative probability estimates) for each possible symbol value in multi-symbol arithmetic coding can be more complex (e.g., complexity grows with alphabet size). Multi-symbol arithmetic coding is not to be confused with binary arithmetic coding, as the two different entropy coding processes are implemented differently and can result in different encoded bitstreams for the same set of quantized transform coefficients and syntax elements 278.

### Video decoder

FIG. 3 illustrates decoder 1 162₁ to decode an encoded bitstream and output a decoded video, according to some embodiments of the disclosure. Decoder 1 162₁ may include one or more of: signal processing operations and data processing operations, including entropy decoding, inverse transform, inverse quantization, Inter and Intra-prediction, in-loop filtering, etc. Decoder 1 162₁ may have signal and data processing operations that mirror the operations performed in the encoder. Decoder 1 162₁ may apply signal and data processing operations that are signaled in encoded bitstream 180 to reconstruct the video. Decoder 1162₁ may receive encoded bitstream 180 and generate and output decoded video 168₁ having a plurality of video frames. The decoded video 168₁ may be provided to one or more display devices for display to one or more human viewers. Decoder 1 162₁ may include one or more of entropy decoding 302, inverse transform and inverse quantization 218, in-loop filter 228, Inter-prediction 236, and Intra-prediction 238. Some of the functionalities are previously described and used in the encoder, such as encoder 102 of FIG. 2.

Entropy decoding 302 may decode the encoded bitstream 180 and output symbols that were coded in the encoded bitstream 180. The symbols may include quantized transform coefficients and syntax elements 278. Entropy decoding 302 may reconstruct the symbols from the encoded bitstream 180.

Inverse transform and inverse quantization 218 may receive quantized transform coefficients and syntax elements 278 and perform operations which are performed in the encoder. Inverse transform and inverse quantization 218 may output reconstructed predicted residues 224. Summer 222 may receive reconstructed predicted residues 224 and predicted samples 212 and generate reconstructed predicted samples 226. Inverse transform and inverse quantization 218 may output syntax elements 278 having signaling information for informing/instructing/controlling operations in decoder 1 162₁ such as mode selection 230, Intra-prediction 238, Inter-prediction 236, and in-loop filter 228.

Depending on the prediction modes signaled in the encoded bitstream 180 (e.g., as syntax elements in quantized transform coefficients and syntax elements 278), Intra-prediction 238 or Inter-prediction 236 may be applied to generate predicted samples 212.

Summer 222 may sum predicted samples 212 of a decoded reference block and reconstructed predicted residues 224 to produce reconstructed predicted samples 226 of a reconstructed block. For Intra-prediction 238, the decoded reference block may be in the same frame as the block that is being decoded or reconstructed. For Inter-prediction 236, the decoded reference block may be in a different (reference) frame in decoded picture buffer 232.

Intra-prediction 238 may determine a reconstructed vector based on a residual vector and a selected vector predictor candidate. Intra-prediction 238 may apply a reconstructed predictor or vector (e.g., in accordance with signaled predictor information) to the reconstructed block, which may be generated using a decoded reference block of the same frame. Intra-prediction 238 may apply a suitable interpolation filter type (e.g., in accordance with signaled interpolation filter information) to the reconstructed block to generate predicted samples 212.

Inter-prediction 236 may determine a reconstructed vector based on a residual vector and a selected vector predictor candidate. Inter-prediction 236 may apply a reconstructed predictor or vector (e.g., in accordance with signaled predictor information) to a reconstructed block, which may be generated using a decoded reference block of a different frame from decoded picture buffer 232. Inter-prediction 236 may apply a suitable interpolation filter type (e.g., in accordance with signaled interpolation filter information) to the reconstructed block to generate predicted samples 212.

In-loop filter 228 may receive reconstructed predicted samples 226. In-loop filter 228 may apply one or more filters signaled in the encoded bitstream 180 to the reconstructed predicted samples 226. In-loop filter 228 may output decoded video 168₁.

### Improved content adaptive resolution decision

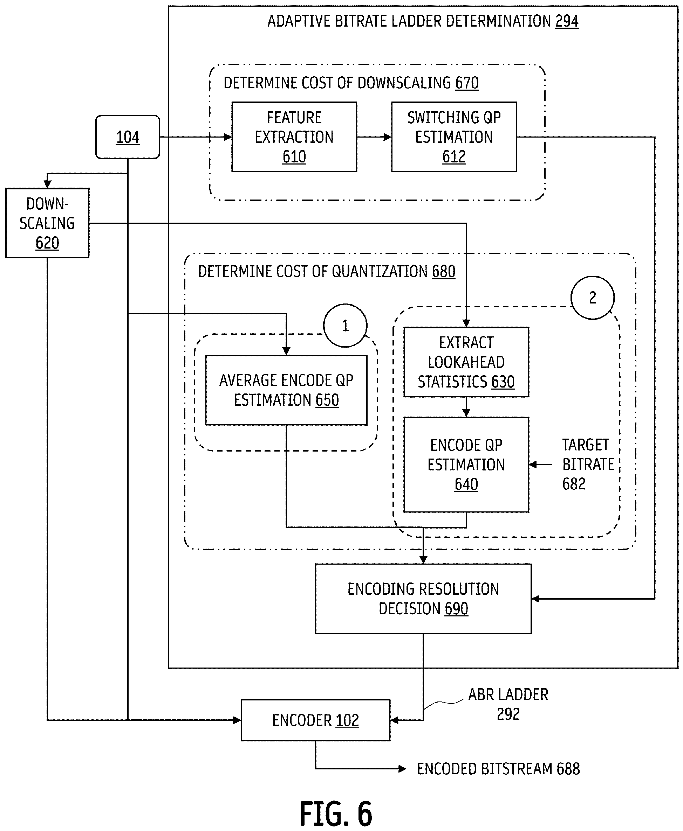

FIG. 6 illustrates exemplary implementations of adaptive bitrate ladder determination 294, according to some embodiments of the disclosure. Adaptive bitrate ladder determination 294 may receive video frames 104 of a video and generate ABR ladder 292. The process of determining a resolution for a given bitrate or bitrate range is illustrated in FIG. 6. The operations may be repeated to determine one or more further resolutions for one or more further bitrates or bitrate ranges.

In some embodiments, adaptive bitrate ladder determination 294 may include determine cost of quantization 680. The cost of quantization may be referred to herein as quantization-caused distortion or distortion caused by quantization of the video. Determine cost of quantization 680 may estimate a distortion caused by quantization of the video at a given bitrate (e.g., target bitrate 682). The distortion caused by quantization can include one or more of: an (average) encode QP, an average encoded QP, and an estimated (average) encode QP at the given bitrate.

In some embodiments, determine cost of quantization 680 may include an implementation that does not involve lookahead analysis (depicted as option 1). The implementation not involving lookahead analysis may include average encode QP estimation 650.

In some embodiments, average encode QP estimation 650 may determine an (average) encode QP of one or more encoded frames of video frames 104 (encoded by encoder 102). The average encode QP can be used by encoding resolution decision 690 to decide the resolution, e.g., on the fly. The average encode QP may be the average QP used for encoding video frames 104 at 1080p resolution.

In some embodiments, determine cost of quantization 680 may include an implementation that involves lookahead analysis (depicted as option 2). The implementation involving lookahead analysis may include extract lookahead statistics 630 and encode QP estimation 640.

Video frames 104 may be downscaled by downscaling 620 to a lower resolution, e.g., from 1080p or original resolution to 480-540p resolution or a smallest allowed resolution. One or more downscaled video frames may be input into extract lookahead statistics 630. Extract lookahead statistics 630 may extract one or more lookahead statistics of the one or more downscaled frames of the video. With lookahead analysis, the statistics of the one or more downscaled frames in a lookahead window can be extracted. These statistics can be used in one or more processes in encoder 102 such as bit allocation, delta QP decision, adaptive GOP decision, etc. In some embodiments, extract lookahead statistics 630 performs lookahead analysis by encoding the one or more downscaled frames with low complexity fast encoding. In some implementations, one or more frame-level lookahead statistics are extracted by extract lookahead statistics 630. The one or more lookahead statistics include total encoded bits, total syntax bits, percentage of skip blocks, percentage of Intra-coded blocks, and peak signal-to-noise ratio (PSNR). The one or more lookahead statistics extracted from low complexity fast encoding of the one or more downscaled frames may offer information about temporal and/or spatial complexity of video frames 104. The average of a frame-level statistic from one or more frames in the lookahead window can be output by extract lookahead statistics 630 as one or more features, which can be provided to encode QP estimation 640.

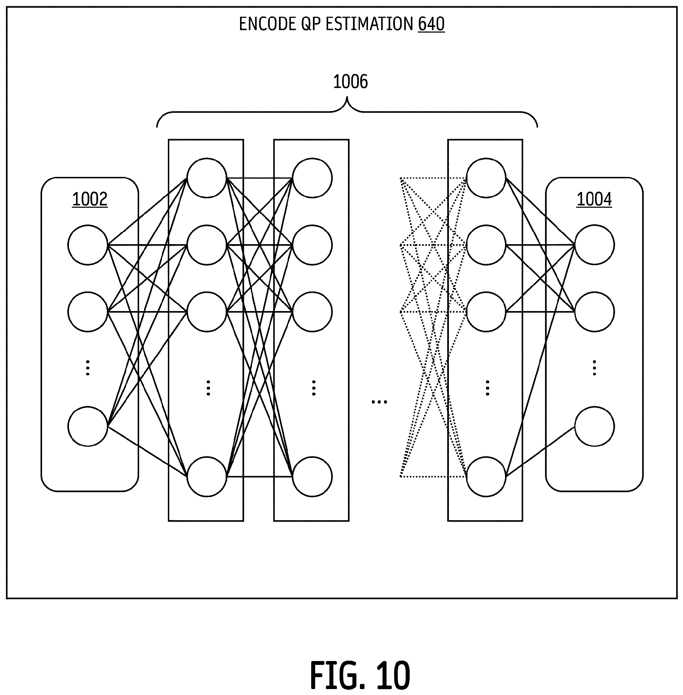

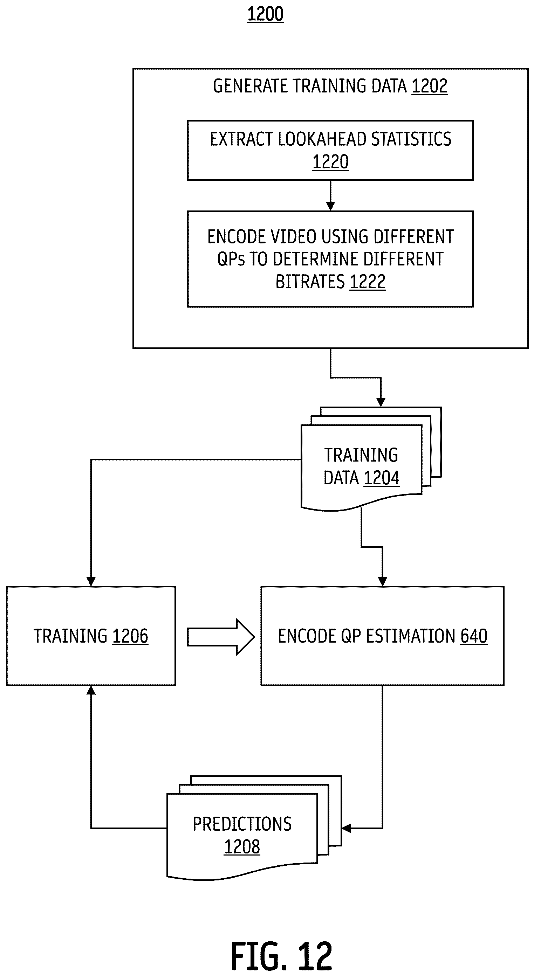

The one or more lookahead statistics can be used as input features to feed into encode QP estimation 640. Furthermore, target bitrate 682 (which is correlated with and/or corresponds to a target frame size or an average target frame size) can be used as an input feature to feed into encode QP estimation 640. For a lookahead window of one or more video frames, the target bitrate can be represented by a frame size (e.g., a number of bits to encode a frame), or an average/characteristic frames size (e.g., an average number of bits to encode the frames in the lookahead window of frames). In some implementations, a frame size or an average/characteristic frame size is used as an input feature to feed into encode QP estimation 640. Encode QP estimation 640 can include a machine learning model. Exemplary implementations of encode QP estimation 640 are illustrated in FIG. 10. Techniques for training the machine learning model of encode QP estimation 640 are illustrated in FIG. 12. The one or more lookahead statistics and the target bitrate 682 (or a derivation thereof) can be input into encode QP estimation 640 (e.g., a machine learning model) to obtain or estimate an average encode QP for encoding the lookahead window of frames and achieve target bitrate 682. The average encode QP may be an average QP that is predicted or expected to be used for encoding video frames 104 at 1080p resolution.

In some embodiments, adaptive bitrate ladder determination 294 may include determine cost of downscaling 670. The cost of downscaling may be referred to herein as downscaling-caused distortion or distortion caused by downscaling of the video. Determine cost of downscaling 670 may estimate a further distortion caused by downscaling of the video. The distortion caused by downscaling can include a switching QP between two candidate resolutions.

In some embodiments, determine cost of downscaling 670 may include feature extraction 610 and switching QP estimation 612.

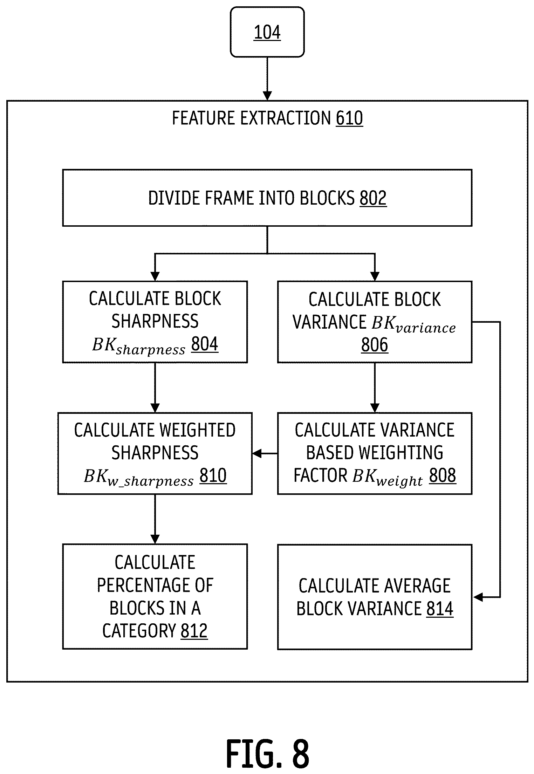

Feature extraction 610 may extract sharpness-related and variance-related features from video frames 104. Feature extraction 610 may determine one or more features of a video frame of video frames 104. Feature extraction 610 may extract one or more features from the video frame. Exemplary implementations of feature extraction 610 are illustrated in FIG. 8. The one or more features may include a block variance measurement. The one or more features may include one or more block sharpness measurements.

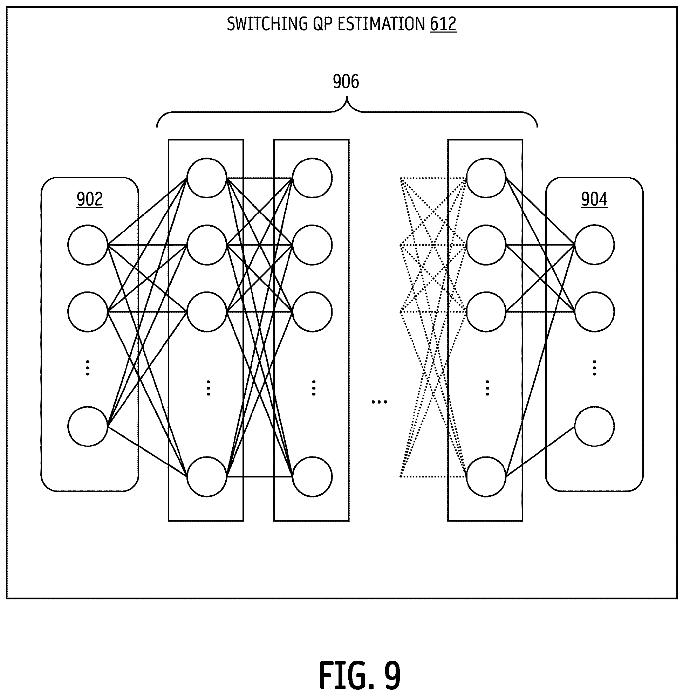

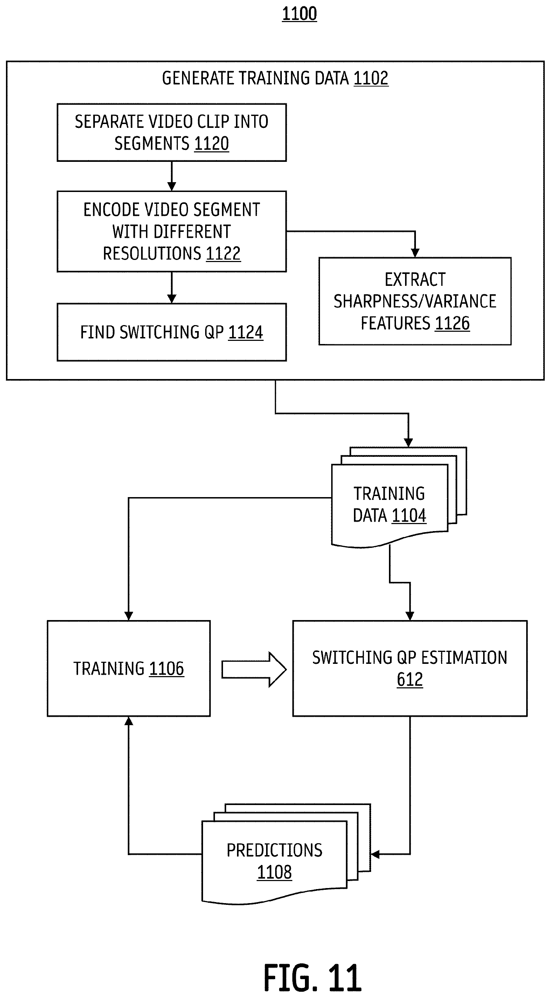

The one or more features determined by feature extraction 610 are input into switching QP estimation 612 to obtain or estimate a switching QP between a candidate video encoding resolution and a further candidate resolution. A switching QP is a QP that is used to encode video frames with consistent visual characteristics when switching from one resolution to another resolution (or when switching from one bitrate to another bitrate in the ABR ladder). In one example, switching QP estimation 612 includes a machine learning model. Exemplary implementations of switching QP estimation 612 are illustrated in FIG. 9. Techniques for training the machine learning model of switching QP estimation 612 are illustrated in FIG. 11. In some implementations, the switching QP between a candidate resolution and a further candidate resolution is a switching QP (e.g., corresponding to a crossing point of two RD curves associated with the two candidate resolutions) that is used to ensure a smooth visual transition when a video player transitions from 1080p resolution to 720p (downscaled) resolution due to bandwidth changes.

Herein, a machine learning model can be implemented using one or more different approaches or architectures. Examples include logistic regression models, decision trees, random forest decision trees, K-nearest neighbor models, support vector machines, Naive Bayes models, neural networks, etc.

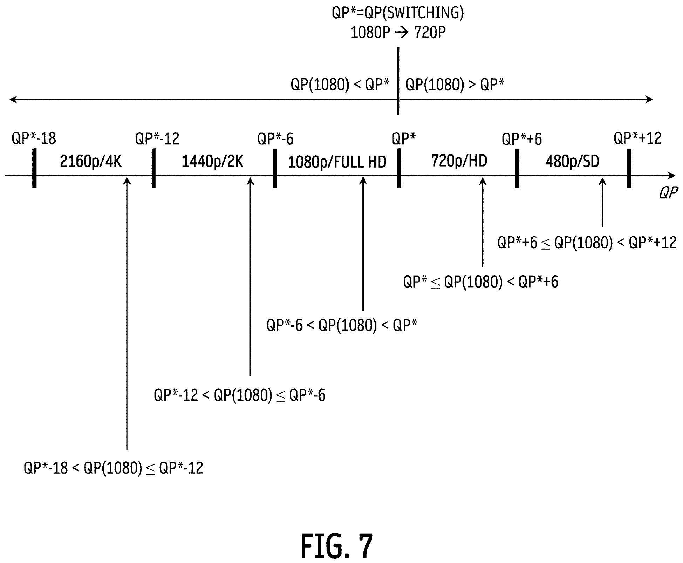

In some embodiments adaptive bitrate ladder determination 294 may include encoding resolution decision 690. Adaptive bitrate ladder determination 294 may receive the distortion associated with quantization (as determined by determine cost of quantization 680) and the further distortion associated with downscaling (as determined by determine cost of downscaling 670) as inputs. Adaptive bitrate ladder determination 294 may output a resolution for encoder 102 to achieve the target bitrate 682. Encoding resolution decision 690 may compare the distortion associated with quantization (as determined by determine cost of quantization 680) and the further distortion associated with downscaling (as determined by determine cost of downscaling 670). Encoding resolution decision 690 may determine a resolution for encoding the video at the target bitrate based on the comparing of the distortion and the further distortion. Encoding resolution decision 690 may select the resolution from a group of candidate resolutions according to the comparing of the distortion and the further distortion. Exemplary selection logic or decision logic implemented by encoding resolution decision 690 is illustrated in FIG. 7. Encoding resolution decision 690 may assess a difference between the distortion associated with quantization (as determined by determine cost of quantization 680) and the further distortion associated with downscaling (as determined by determine cost of downscaling 670).

It may be desirable for encoding resolution decision 690 to maintain a stable resolution decision and not change the resolution decision unnecessarily or too frequently based on the average encode QP determined by average encode QP estimation 650. A sudden and/or sufficiently large change in the average encode QP determined by average encode QP estimation 650 may trigger a new decision to be made by encoding resolution decision 690 to change the resolution. Otherwise, encoding resolution decision 690 may wait for the next IDR-frame before making a new decision on the resolution.

The resolution determined by encoding resolution decision 690 along with the target bitrate 682 can form at least a part of ABR ladder 292. ABR ladder 292 can be used to control encoder 102 to generate one or more encoded bitstreams 688 at one or more resolutions of ABR ladder 292 to be used for the one or more corresponding bitrates or bitrate ranges of ABR ladder 292.

FIG. 7 illustrates logic for determining an encoding resolution, according to some embodiments of the disclosure. To illustrate the logic, adaptive bitrate ladder determination 294 of FIG. 2 determined the switching QP from 1080p to 720p as the QP(SWITCHING) or QP* to represent the cost of downscaling. Adaptive bitrate ladder determination 294 also determined QP(1080) as the average encode QP to represent the cost of quantization. The logic for determining the resolution is based on the insight that if the cost of quantization (QP(1080)) is expected to be higher than the cost of downscaling (QP*) for a given video (e.g., such as a high complexity video), a lower resolution may be selected to encode the video for a target bitrate. If cost of downscaling is expected to be higher than the cost of quantization for a given video (e.g., such as a low complexity video), a higher resolution may be selected to encode the video for a target bitrate. A resolution may be determined based on how different the costs, or how large the difference is between the costs. If the difference is larger, a bigger change in resolution may be decided or determined.

The following logic may be applied to determine an encoding resolution:
- If $QP * - 6 < QP \left(1080\right) < QP * , use 1080 p / Full HD$
- If $QP * - 12 < QP \left(1080\right) \leq QP * - 6 , use 1440 p / 2 K$
- If $QP * - 18 < QP \left(1080\right) \leq QP * - 12 , use 2160 p / 4 K$
- If $QP * - 24 < QP \left(1080\right) \leq QP * - 18 , use 4320 p / 8 K$
- If $QP * \leq QP \left(1080\right) < QP * 6 , use 720 p / HD$
- If $QP * + 6 \leq QP \left(1080\right) < QP * + 12 , use 480 p / SD$

The value 6 is used as a representative unit for assessing how large the difference is between the costs, and it is envisioned that other values can be used. The logic above expresses that when the cost of quantization (QP(1080)) is greater than the cost of downscaling (QP*), a lower resolution is selected. Depending on how much the cost of quantization (QP(1080)) is greater than the cost of downscaling (QP*), a progressively lower resolution may be selected. The logic above expresses that when the cost of quantization (QP(1080)) is less than the cost of downscaling (QP*), a higher resolution is selected. Depending on how much the cost of quantization (QP(1080)) is less than the cost of downscaling (QP*), a progressively higher resolution may be selected.

FIG. 8 illustrates feature extraction 610, according to some embodiments of the disclosure. For different types of video content, the distortion caused by downscaling can be different. For example, downscaling errors in smooth areas are smaller than downscaling errors in areas with shape edges. Motivated by this insight, feature extraction 610 may extract variance and/or sharpness as metrics or measurements to estimate cost associated with downscaling, e.g., the switching QP. Feature extraction 610 can receive video frames 104 as input and output one or more variance-based features and/or one or more sharpness-based features.

In 802, a video frame of video frames 104 may be divided into blocks, such as 8x8 blocks. A block may be represented to have pixel values *P*(*i,j*) where *i* = 0, ...,7, and *j* = 0, ...,7.

In 804, feature extraction 610 may calculate block sharpness *BKₛₕₐᵣₚₙₑₛₛ* for a block, e.g., for each 8x8 block, according to: ${BK}_{sharpness} = {\sum }_{i = 0 , j = 0}^{i = 7 , j = 7} \left(\left|4∗P\left(i, j\right)-P\left(i+1,j\right)-P\left(i-1,j\right)-P\left(i,j+1\right)-P\left(i,j-1\right)\right|/8\right) ≫ 4$ .

In 806, feature extraction 610 may calculate block variance *BK_{variance}* for a block, e.g., for each 8x8 block, according to: ${BK}_{variance} = \frac{1}{64} {{\sum }_{i = 0 , j = 0}^{i = 7 , j = 7} \left(P\left(i, j\right)-{P}_{average}\right)}^{2}$.

In 808, feature extraction 610 may calculate a variance-based weighing factor *BK_{weight}* for a block, e.g., for each 8x8 block, according to: ${BK}_{weight} = \left(Min\left({BK}_{variance}\right)≫4\right) + 1$ $If {BK}_{weight} > 4 , then {BK}_{weight} = 4 , else if {BK}_{weight} > 2 , then {BK}_{weight} = 2$

*Min*(*BK_{variance}*) denotes a minimum variance among the current 8x8 block and one or more of its neighboring 8x8 blocks. There may be up to 8 neighboring 8x8 blocks.

In 810, feature extraction 610 may calculate a weighted sharpness *BK_{w_sharpness}* for a block, e.g., for each 8x8 block, according to: *BK_{w_sharpness}*= *BKₛₕₐᵣₚₙₑₛₛ*/*BK_{weight}.*

In 812, feature extraction 610 may calculate for the video frame the percentage or proportion of blocks falling under one or more of these classes or categories, based on the weighted sharpness *BK_{w_sharpness}* of various blocks of the video frame: Flat: *BK_{w_sharpness}*≤1; Weak: 2 *< BK_{w_sharpness}* ≤ 4; Moderate: 4 *< BK_{w_sharpness}* ≤ 7; Strong: 8 *< BK_{w_sharpness}* ≤ 10; Extreme: ${BK}_{w _ sharpness} > 10$

In 814, feature extraction 610 may calculate for the video frame a characteristic (e.g., mean or average, mode, or median) block variance based on the block variance *BK_{variance}* of various blocks of the video frame.

The percentage or proportion of blocks falling under one or more of these classes or categories and/or the characteristic block variance for the video frame can be used as one or more inputs to QP estimation 612 of FIG. 6.

FIG. 9 illustrates switching QP estimation 612, according to some embodiments of the disclosure. Switching QP estimation 612 may include a multi-layer neural network as a machine learning model. Machine learning models, such as neural networks, can be trained to robustly produce predictions and classifications, handle complex datasets, mitigate overfitting of data, and reveal valuable feature importance insights.

However, it is not trivial to design a neural network for switching QP estimation 612. The objective task of the neural network is to produce an indicator/estimator/proxy for the cost/distortion associated with downsampling or the cost/distortion associated with changing from a high resolution to a lower resolution. To achieve the objective task with a neural network that would converge during training and make robust predictions, one or more input features and the one or more output features are strategically designed and selected to achieve the objective task. The multi-layer neural network may include input layer 902, one or more hidden layers 906, and output layer 904.

Input layer 902 receives one or more input features, such as input features generated by feature extraction 610 of FIGS. 6 and 8. Input layer 902 passes the input features to the one or more hidden layers 906, e.g., through fully-connected connections.

Complex computations and transformations occur in one or more hidden layers 906. A hidden layer in the one or more hidden layers 906 include one or more neurons, which can apply parameterizable activation functions to the input data, enabling the network to learn and model intricate patterns. Examples of activation functions include: a sigmoid function which maps input values to a range between 0 and 1, a Rectified Linear Unit (ReLU) which outputs the input directly if it is positive; otherwise, it outputs zero, a hyperbolic tangent (tanh) function which maps input values to a range between -1 and 1, a leaky ReLU function which allows a small, non-zero gradient when the input is negative, a SoftMax function which converts the input values into probabilities that sum to 1, and a Swish function which is defined as Swish(x)=x·sigmoid(x).

Output layer 904 processes the transformed data from the one or more hidden layers 906 to generate the final output, i.e., a predicted switching QP. In some cases, output layer 904 may include a number of neurons implementing SoftMax function, such as a neuron for each possible QP value (e.g., 0 to 51, or a smaller range of QP values), and the neuron that outputs a highest probability would be mapped to a predicted switching QP.

The multi-layer neural network architecture allows switching QP estimation 612 to effectively capture and represent non-linear relationships within the data. The multi-layer neural network can effectively understand content evolution and extrapolate behavior trends within the training data.

FIG. 10 illustrates encode QP estimation 640, according to some embodiments of the disclosure. Encode QP estimation 640 may include a multi-layer neural network as a machine learning model. Machine learning models, such as neural networks, can be trained to robustly produce predictions and classifications, handle complex datasets, mitigate overfitting of data, and reveal valuable feature importance insights.

However, it is not trivial to design a neural network for encode QP estimation 640. The objective task of the neural network is to produce an indicator/estimator/proxy for the cost/distortion associated with quantization at a target bitrate. To achieve the objective task with a neural network that would converge during training and make robust predictions, one or more input features and the one or more output features are strategically designed and selected to achieve the objective task. The multi-layer neural network may include input layer 1002, one or more hidden layers 1006, and output layer 1004.

Input layer 902 receives one or more input features, such as input features generated by extract lookahead statistics 630 of FIG. 6 and a target bitrate 682 (or average target frame size, a derivation of bitrate). Input layer 1002 passes the input features to the one or more hidden layers 1006, e.g., through fully-connected connections. The one or more hidden layers 1006 may be implemented similarly to the one or more hidden layers 906 of FIG. 9.

Output layer 904 processes the transformed data from the one or more hidden layers 906 to generate the final output, i.e., a predicted average encode QP. In some cases, output layer 904 may include a number of neurons implementing SoftMax function, such as a neuron for each possible QP value (e.g., 0 to 51, or a smaller range of QP values), and the neuron that outputs a highest probability would be mapped to a predicted average encode QP.

The multi-layer neural network architecture allows encode QP estimation 640 to effectively capture and represent non-linear relationships within the data. The multi-layer neural network can effectively understand content evolution and extrapolate behavior trends within the training data.

Referring to FIGS. 9 and 10, it is envisioned that other neural network designs having different layers can be implemented in switching QP estimation 612 and/or encode QP estimation 640. It is also envisioned that other types of machine learning models can be used in switching QP estimation 612 and/or encode QP estimation 640. Linear regression models predict continuous values based on the linear relationship between input features and the output. Polynomial regression extends this by fitting a polynomial equation to the data, allowing for more complex relationships. Support Vector Regression (SVR) utilizes support vector machines to predict continuous values, which is effective for high-dimensional data. Decision trees predict continuous values by splitting the data into subsets based on feature values, while random forest regression, an ensemble method, uses multiple decision trees to improve prediction accuracy. Gradient boosting regression builds models sequentially to correct errors made by previous models. K-Nearest Neighbors (KNN) regression predicts the output based on the average of the nearest neighbors' values. Bayesian regression incorporates Bayesian principles to predict continuous values with uncertainty estimation, and ridge regression, a variant of linear regression, includes regularization to prevent overfitting. These models can be tailored to predict values within the specified range by adjusting their parameters and training them on relevant data.

### Training machine learning models, including neural networks

FIG. 11 illustrates system 1100 for training a neural network for switching QP estimation 612, according to some embodiments of the disclosure. Switching QP estimation 612 can be trained by feeding switching QP estimation 612 with training data 1104. During training, the neural network in switching QP estimation 612 processes input values of training data 1104 through its layers, e.g., applying activation functions at each neuron to generate predictions 1108. Training 1106 can compare predictions 1108 against the (ground truth) output values of training data 1104 using a loss function. The loss function can quantify the difference between predictions 1108 and the (ground truth) output values. Training 1106 can use the loss to adjust parameters (e.g., weights and biases) of the neural network in switching QP estimation 612 through a process called backpropagation, where gradients are calculated and used by training 1106 to update the parameters in a way that minimizes the loss. This iterative process continues over multiple epochs, gradually improving the neural network's ability to make accurate predictions. By the end of training, the neural network in switching QP estimation 612 has learned to model the underlying patterns in training data 1104, enabling it to generalize and perform well on unseen data to predict the switching QP. In some cases, training 1106 may involve fine-tuning one or more parameters of switching QP estimation 612.

Training data 1104 includes many input-output pairs or mappings. Generate training data 1102 illustrates how to produce training data 1104. In 1120, a video clip may be separated into one or more segments. Frames in a segment may have similar characteristics (e.g., no scene change, no sudden motion change, etc.). In 1122, the segment may be encoded at different resolutions. In 1124, the crossing point of RD curves associated with different resolutions may be identified in the Convex Hull curve to find the switching QP. In 1126, the segment may be processed to extract the one or more sharpness-related features and/or one or more variance-related features. The features may be extracted in the manner described in FIGS. 6 and 8. The one or more sharpness-related features and/or one or more variance-related features extracted in 1126 and the switching QP found in 1124 may be stored as an input-output pair/mapping to form training data 1104.

FIG. 12 illustrates system 1200 for training a neural network for encode QP estimation 640, according to some embodiments of the disclosure. Encode QP estimation 640 can be trained by feeding encode QP estimation 640 with training data 1204. During training, the neural network in encode QP estimation 640 processes input values of training data 1204 through its layers, e.g., applying activation functions at each neuron to generate predictions 1208. Training 1206 can compare predictions 1208 against the (ground truth) output values of training data 1204 using a loss function. The loss function can quantify the difference between predictions 1208 and the (ground truth) output values. Training 1206 can use the loss to adjust parameters (e.g., weights and biases) of the neural network in encode QP estimation 640 through a process called backpropagation, where gradients are calculated and used by training 1206 to update the parameters in a way that minimizes the loss. This iterative process continues over multiple epochs, gradually improving the neural network's ability to make accurate predictions. By the end of training, the neural network in encode QP estimation 640 has learned to model the underlying patterns in training data 1204, enabling it to generalize and perform well on unseen data to predict the average encode QP. In some cases, training 1206 may involve fine-tuning one or more parameters of encode QP estimation 640.

Training data 1204 includes many input-output pairs or mappings. Generate training data 1202 illustrates how to produce training data 1204. For a given video clip, the bitrate of the encoded video clip can be determined by a given QP and the encoder configuration. The lookahead encoding process can involve a constant QP based encoding process. In 1220, one or more lookahead statistics can be extracted from a video. The one or more look ahead statistics can be extracted according to extract lookahead statistics 630 of FIG. 6. In 1222, the video clip can be encoded using a variety of QPs to determine different resulting bitrates of the encoded video clip. The resulting bitrate and one or more lookahead statistics, and the particular QP used in the encoding process can stored as an input-output pair/mapping to form training data 1204.

### Methods for determining a resolution for a target bitrate

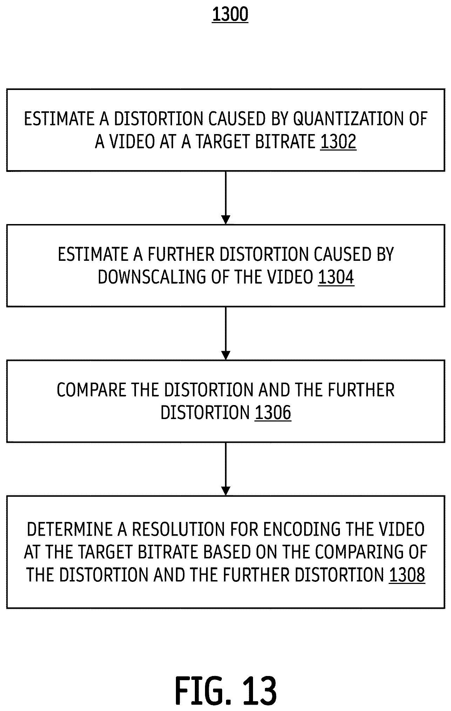

FIG. 13 is a flow diagram illustrating method 1300 for determining a resolution for a target bitrate, according to some embodiments of the disclosure. Method 1300 can be carried out by one or more components of adaptive bitrate ladder determination 294 of FIGS. 2 and 6.

In 1302, a distortion caused by quantization of a video at a target bitrate is estimated.

In 1304, a further distortion caused by downscaling of the video is estimated.

In 1306, the distortion and the further distortion are compared.

In 1308, a resolution for encoding the video at the target bitrate is determined based on the comparing of the distortion and the further distortion.

### Exemplary computing device

FIG. 14 is a block diagram of an apparatus or a system, e.g., an exemplary computing device 1400, according to some embodiments of the disclosure. One or more computing devices 1400 may be used to implement the functionalities described with the FIGS. and herein. A number of components are illustrated in FIG. 14 can be included in the computing device 1400, but any one or more of these components may be omitted or duplicated, as suitable for the application. In some embodiments, some or all of the components included in the computing device 1400 may be attached to one or more otherboards. In some embodiments, some or all of these components are fabricated onto a single system on a chip (SoC) die. Additionally, in various embodiments, the computing device 1400 may not include one or more of the components illustrated in FIG. 14, and the computing device 1400 may include interface circuitry for coupling to the one or more components. For example, the computing device 1400 may not include a display device 1406, and may include display device interface circuitry (e.g., a connector and driver circuitry) to which a display device 1406 may be coupled. In another set of examples, the computing device 1400 may not include an audio input device 1418 or an audio output device 1408 and may include audio input or output device interface circuitry (e.g., connectors and supporting circuitry) to which an audio input device 1418 or audio output device 1408 may be coupled.

The computing device 1400 may include a processing device 1402 (e.g., one or more processing devices, one or more of the same type of processing device, one or more of different types of processing device). The processing device 1402 may include processing circuitry or electronic circuitry that process electronic data from data storage elements (e.g., registers, memory, resistors, capacitors, quantum bit cells) to transform that electronic data into other electronic data that may be stored in registers and/or memory. Examples of processing device 1402 may include a CPU, a GPU, a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 1400 may include a memory 1404, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1404 includes one or more non-transitory computer-readable storage media. In some embodiments, memory 1404 may include memory that shares a die with the processing device 1402.

In some embodiments, memory 1404 includes one or more non-transitory computer-readable media storing instructions executable to perform operations described herein, such as operations illustrated in FIGS. 1-12, and method 1300. In some embodiments, memory 1404 includes one or more non-transitory computer-readable media storing instructions executable to perform one or more operations of encoder 102. In some embodiments, memory 1404 includes one or more non-transitory computer-readable media storing instructions executable to perform one or more operations of adaptive bitrate ladder determination 294. In some embodiments, memory 1404 includes one or more non-transitory computer-readable media storing instructions executable to perform one or more operations of downscaling 620. The instructions stored in memory 1404 may be executed by processing device 1402.

In some embodiments, memory 1404 may store data, e.g., data structures, binary data, bits, metadata, files, blobs, etc., as described with the FIGS. and herein. Memory 1404 may include one or more non-transitory computer-readable media storing one or more of: input frames to the encoder (e.g., video frames 104), intermediate data structures computed by the encoder, bitstream generated by the encoder (e.g., encoded bitstream 180, one or more encoded bitstreams 688), bitstream received by a decoder (e.g., encoded bitstream 180, one or more encoded bitstreams 688), intermediate data structures computed by the decoder, and reconstructed frames generated by the decoder. Memory 1404 may include one or more non-transitory computer-readable media storing one or more of: data received and/or data generated by adaptive bitrate ladder determination 294. Memory 1404 may include one or more non-transitory computer-readable media storing one or more of: data received and/or data generated by method 1300 of FIG. 13.

In some embodiments, memory 1404 may store one or more machine learning models (and or parts thereof) that are used in at least switching QP estimation 612 of FIGS. 6, 9, and 11, and encode QP estimation 640 of FIGS. 6, 10 and 12. In some embodiments, memory 1404 may store one or more components and/or data of system 1100 and/or one or more components and/or data of system 1200. Memory 1404 may store training data for training the one or more machine learning models (e.g., training data 1102 of FIG. 11 and training data 1202 of FIG. 12). Memory 1404 may store input data, output data, intermediate outputs, and intermediate inputs of one or more machine learning models. Memory 1404 may store instructions to perform one or more operations of the machine learning model. Memory 1404 may store one or more parameters used by the machine learning model. Memory 1404 may store information that encodes how neurons of the machine learning model are connected with each other.

In some embodiments, the computing device 1400 may include a communication device 1412 (e.g., one or more communication devices). For example, the communication device 1412 may be configured for managing wired and/or wireless communications for the transfer of data to and from the computing device 1400. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1412 may implement any of a number of wireless standards or protocols, including but not limited to Institute for Electrical and Electronic Engineers (IEEE) standards including Wi-Fi (IEEE 1402.10 family), IEEE 1402.16 standards (e.g., IEEE 1402.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 1402.16 compatible Broadband Wireless Access (BWA) networks are generally referred to as WiMAX networks, an acronym that stands for worldwide interoperability for microwave access, which is a certification mark for products that pass conformity and interoperability tests for the IEEE 1402.16 standards. The communication device 1412 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1412 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1412 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 4G, 4G, 5G, and beyond. The communication device 1412 may operate in accordance with other wireless protocols in other embodiments. The computing device 1400 may include an antenna 1422 to facilitate wireless communications and/or to receive other wireless communications (such as radio frequency transmissions). Computing device 1400 may include receiver circuits and/or transmitter circuits. In some embodiments, the communication device 1412 may manage wired communications, such as electrical, optical, or any other suitable communication protocols (e.g., the Ethernet). As noted above, the communication device 1412 may include multiple communication chips. For instance, a first communication device 1412 may be dedicated to shorter-range wireless communications such as Wi-Fi or Bluetooth, and a second communication device 1412 may be dedicated to longer-range wireless communications such as global positioning system (GPS), EDGE, GPRS, CDMA, WiMAX, LTE, EV-DO, or others. In some embodiments, a first communication device 1412 may be dedicated to wireless communications, and a second communication device 1412 may be dedicated to wired communications.

The computing device 1400 may include power source / power circuitry 1414. The power source / power circuitry 1414 may include one or more energy storage devices (e.g., batteries or capacitors) and/or circuitry for coupling components of the computing device 1400 to an energy source separate from the computing device 1400 (e.g., DC power, AC power, etc.).

The computing device 1400 may include a display device 1406 (or corresponding interface circuitry, as discussed above). The display device 1406 may include any visual indicators, such as a heads-up display, a computer monitor, a projector, a touchscreen display, a liquid crystal display (LCD), a light-emitting diode display, or a flat panel display, for example.

The computing device 1400 may include an audio output device 1408 (or corresponding interface circuitry, as discussed above). The audio output device 1408 may include any device that generates an audible indicator, such as speakers, headsets, or earbuds, for example.

The computing device 1400 may include an audio input device 1418 (or corresponding interface circuitry, as discussed above). The audio input device 1418 may include any device that generates a signal representative of a sound, such as microphones, microphone arrays, or digital instruments (e.g., instruments having a musical instrument digital interface (MIDI) output).

The computing device 1400 may include a GPS device 1416 (or corresponding interface circuitry, as discussed above). The GPS device 1416 may be in communication with a satellite-based system and may receive a location of the computing device 1400, as known in the art.

The computing device 1400 may include a sensor 1430 (or one or more sensors). The computing device 1400 may include corresponding interface circuitry, as discussed above). Sensor 1430 may sense physical phenomenon and translate the physical phenomenon into electrical signals that can be processed by, e.g., processing device 1402. Examples of sensor 1430 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1400 may include another output device 1410 (or corresponding interface circuitry, as discussed above). Examples of the other output device 1410 may include an audio codec, a video codec, a printer, a wired or wireless transmitter for providing information to other devices, haptic output device, gas output device, vibrational output device, lighting output device, home automation controller, or an additional storage device.

The computing device 1400 may include another input device 1420 (or corresponding interface circuitry, as discussed above). Examples of the other input device 1420 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1400 may have any desired form factor, such as a handheld or mobile computer system (e.g., a cell phone, a smart phone, a mobile Internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1400 may be any other electronic device that processes data.

### Select examples

Example 1 provides a method, including estimating a distortion caused by quantization of a video at a target bitrate; estimating a further distortion caused by downscaling of the video; comparing the distortion and the further distortion; and determining a resolution for encoding the video at the target bitrate based on the comparing of the distortion and the further distortion.

Example 2 provides the method of example 1, where: the distortion caused by quantization includes an encode quantization parameter; and the further distortion caused by downscaling includes a switching quantization parameter between a candidate resolution and a further candidate resolution.

Example 3 provides the method of example 1 or 2, where estimating the distortion caused by quantization of the video includes determining one or more lookahead statistics of one or more downscaled frames of the video; and inputting the one or more lookahead statistics and the target bitrate into a machine learning model to obtain an average encode quantization parameter.

Example 4 provides the method of example 3, where the one or more lookahead statistics include one or more of: total encoded bits, total syntax bits, a percentage of skip blocks, a percentage of Intra-coded blocks, and a peak signal-to-noise ratio.

Example 5 provides the method of any one of examples 1-4, where estimating the distortion caused by quantization of the video includes determining an encode quantization parameter of one or more encoded frames of the video.

Example 6 provides the method of any one of examples 1-5, where estimating the further distortion caused by downscaling of the video includes determining one or more features of a frame of the video; and inputting the one or more features into a machine learning model to obtain a switching quantization parameter between a candidate resolution and a further candidate resolution.

Example 7 provides the method of example 6, where the one or more features includes a block variance measurement.

Example 8 provides the method of example 6 or 7, where the one or more features includes one or more block sharpness measurements.

Example 9 provides the method of any one of examples 1-8, where determining the resolution for encoding the video at the target bitrate includes selecting the resolution from a group of candidate resolutions according to the comparing of the distortion and the further distortion.

Example 10 provides the method of any one of examples 1-9, where comparing the distortion and the further distortion includes assessing a difference between the distortion and the further distortion.

Example 11 provides one or more non-transitory computer-readable media storing instructions that, when executed by one or more processors, cause the one or more processors to: estimate a distortion caused by quantization of a video at a target bitrate; estimate a further distortion caused by downscaling of the video; compare the distortion and the further distortion; and determine a resolution for encoding the video at the target bitrate based on the comparing of the distortion and the further distortion.

Example 12 provides the one or more non-transitory computer-readable media of example 11, where: the distortion caused by quantization includes an encode quantization parameter; and the further distortion caused by downscaling includes a switching quantization parameter between a candidate resolution and a further candidate resolution.

Example 13 provides the one or more non-transitory computer-readable media of example 11 or 12, where estimating the distortion caused by quantization of the video includes determining one or more lookahead statistics of one or more downscaled frames of the video; and inputting the one or more lookahead statistics and the target bitrate into a machine learning model to obtain an average encode quantization parameter.

Example 14 provides the one or more non-transitory computer-readable media of example 13, where the one or more lookahead statistics include one or more of: total encoded bits, total syntax bits, a percentage of skip blocks, a percentage of Intra-coded blocks, and a peak signal-to-noise ratio.

Example 15 provides the one or more non-transitory computer-readable media of any one of examples 11-14, where estimating the distortion caused by quantization of the video includes determining an encode quantization parameter of one or more encoded frames of the video.

Example 16 provides the one or more non-transitory computer-readable media of any one of examples 11-15, where estimating the further distortion caused by downscaling of the video includes determining one or more features of a frame of the video; and inputting the one or more features into a machine learning model to obtain a switching quantization parameter between a candidate resolution and a further candidate resolution.

Example 17 provides the one or more non-transitory computer-readable media of example 16, where the one or more features includes a block variance measurement.

Example 18 provides the one or more non-transitory computer-readable media of example 16 or 17, where the one or more features includes one or more block sharpness measurements.

Example 19 provides the one or more non-transitory computer-readable media of any one of examples 11-18, where determining the resolution for encoding the video at the target bitrate includes selecting the resolution from a group of candidate resolutions according to the comparing of the distortion and the further distortion.

Example 20 provides the one or more non-transitory computer-readable media of any one of examples 11-19, where comparing the distortion and the further distortion includes assessing a difference between the distortion and the further distortion.

Example 21 provides an apparatus, including one or more processors; and one or more non-transitory computer-readable media storing instructions that, when executed by the one or more processors, cause the one or more processors to: estimate a distortion caused by quantization of a video at a target bitrate; estimate a further distortion caused by downscaling of the video; compare the distortion and the further distortion; and determine a resolution for encoding the video at the target bitrate based on the comparing of the distortion and the further distortion.

Example 22 provides the apparatus of example 21, where: the distortion caused by quantization includes an encode quantization parameter; and the further distortion caused by downscaling includes a switching quantization parameter between a candidate resolution and a further candidate resolution.

Example 23 provides the apparatus of example 21 or 22, where estimating the distortion caused by quantization of the video includes determining one or more lookahead statistics of one or more downscaled frames of the video; and inputting the one or more lookahead statistics and the target bitrate into a machine learning model to obtain an average encode quantization parameter.

Example 24 provides the apparatus of example 23, where the one or more lookahead statistics include one or more of: total encoded bits, total syntax bits, a percentage of skip blocks, a percentage of Intra-coded blocks, and a peak signal-to-noise ratio.

Example 25 provides the apparatus of any one of examples 21-24, where estimating the distortion caused by quantization of the video includes determining an encode quantization parameter of one or more encoded frames of the video.

Example 26 provides the apparatus of any one of examples 21-25, where estimating the further distortion caused by downscaling of the video includes determining one or more features of a frame of the video; and inputting the one or more features into a machine learning model to obtain a switching quantization parameter between a candidate resolution and a further candidate resolution.

Example 27 provides the apparatus of example 26, where the one or more features includes a block variance measurement.

Example 28 provides the apparatus of example 26 or 27, where the one or more features includes one or more block sharpness measurements.

Example 29 provides the apparatus of any one of examples 21-28, where determining the resolution for encoding the video at the target bitrate includes selecting the resolution from a group of candidate resolutions according to the comparing of the distortion and the further distortion.

Example 30 provides the apparatus of any one of examples 21-29, where comparing the distortion and the further distortion includes assessing a difference between the distortion and the further distortion.

Example 31 provides a method, including separating a video into one or more segments; encoding a segment of the one or more segments at one or more resolutions; identifying a switching quantization parameter based on one or more Rate-Distortion curves produced from encoding the segment at the one or more resolutions; extracting one or more features from the segment, the one or more features including one or more of: a sharpness feature and a variance feature; and forming an input-output mapping based on the one or more features and the switching quantization parameter.

Example 32 provides the method of example 31, further including updating one or more parameters of a machine learning model using the input-output mapping.

Example 33 provides the method of example 31 or 32, where the one or more segments have similar or the same characteristic.

Example 34 provides the method of any one of examples 31-33, where the sharpness feature includes one or more block sharpness measurements.

Example 35 provides the method of any one of examples 31-34, where the variance feature includes a block variance measurement.

Example 36 provides the method of any one of examples 31-35, where the machine learning model includes a multi-layer neural network.

Example 37 provides a method, including extracting one or more lookahead statistics from a video; encoding the video using a quantization parameters to obtain a resulting bitrate; and forming an input-output mapping based on the one or more lookahead statistics, the quantization parameter and the resulting bitrate.

Example 38 provides the method of example 37, further including updating one or more parameters of a machine learning model using the input-output mapping.

Example 39 provides the method of example 37 or 38, where the one or more lookahead statistics include one or more of: total encoded bits, total syntax bits, a percentage of skip blocks, a percentage of Intra-coded blocks, and a peak signal-to-noise ratio.

Example 40 provides the method of any one of examples 37-39, where the machine learning model includes a multi-layer neural network.

Example 41 provides one or more non-transitory computer-readable media storing instructions that, when executed by one or more processors, cause the one or more processors to perform a method according to any one of examples 31-40.

Example 42 provides an apparatus, including one or more processors; and one or more non-transitory computer-readable media storing instructions that, when executed by the one or more processors, cause the one or more processors to a method according to any one of examples 31-40.

Example A provides a computer program product comprising instructions, that when executed by a processor, causes the processor to perform a method of any one of examples 1-10 and 31-40.

Example B provides an apparatus comprising means for performing a method of any one of examples 1-10 and 31-40.

Example C provides adaptive bitrate ladder determination as described and illustrated herein.

Example E provides an encoder and adaptive bitrate later determination as described and illustrated herein.

Example F provides an apparatus comprising computing circuitry or logic for performing a method of any one of examples 1-10.

Example G provides generate training data 1102 as described and illustrated herein, to train switching QP estimation 612 as described and illustrated herein.

Example H provides generate training data 1202 as described and illustrated herein, to train encode QP estimation 640 as described and illustrated herein.

### Variations and other notes

Although the operations of the example method shown in and described with reference to FIGS. 1-13 are illustrated as occurring once each and in a particular order, it will be recognized that some operations may be performed in any suitable order and repeated as desired. Additionally, one or more operations may be performed in parallel. Furthermore, the operations illustrated in FIGS. 1-13 may be combined or may include more or fewer details than described.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

For the purposes of the present disclosure, "A is less than or equal to a first threshold" is equivalent to "A is less than a second threshold" provided that the first threshold and the second thresholds are set in a manner so that both statements result in the same logical outcome for any value of A. For the purposes of the present disclosure, "B is greater than a first threshold" is equivalent to "B is greater than or equal to a second threshold" provided that the first threshold and the second thresholds are set in a manner so that both statements result in the same logical outcome for any value of B.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1. A method, comprising:
estimating a distortion caused by quantization of a video at a target bitrate;
estimating a further distortion caused by downscaling of the video;
comparing the distortion and the further distortion; and
determining a resolution for encoding the video at the target bitrate based on the comparing of the distortion and the further distortion.

2. The method of claim 1, wherein:
the distortion caused by quantization comprises an encode quantization parameter; and
the further distortion caused by downscaling comprises a switching quantization parameter between a candidate resolution and a further candidate resolution.

3. The method of claim 1 or 2, wherein estimating the distortion caused by quantization of the video comprises:
determining one or more lookahead statistics of one or more downscaled frames of the video; and
inputting the one or more lookahead statistics and the target bitrate into a machine learning model to obtain an average encode quantization parameter.

4. The method of claim 3, wherein the one or more lookahead statistics comprise one or more of: total encoded bits, total syntax bits, a percentage of skip blocks, a percentage of Intra-coded blocks, and a peak signal-to-noise ratio.

5. The method of any one of claims 1-4, wherein estimating the distortion caused by quantization of the video comprises:
determining an encode quantization parameter of one or more encoded frames of the video.

6. The method of any one of claims 1-5, wherein estimating the further distortion caused by downscaling of the video comprises:
determining one or more features of a frame of the video; and
inputting the one or more features into a machine learning model to obtain a switching quantization parameter between a candidate resolution and a further candidate resolution.

7. The method of claim 6, wherein the one or more features comprises a block variance measurement.

8. The method of claim 6 or 7, wherein the one or more features comprises one or more block sharpness measurements.

9. The method of any one of claims 1-8, wherein determining the resolution for encoding the video at the target bitrate comprises:
selecting the resolution from a group of candidate resolutions according to the comparing of the distortion and the further distortion.

10. The method of any one of claims 1-9, wherein comparing the distortion and the further distortion comprises assessing a difference between the distortion and the further distortion.

11. One or more non-transitory computer-readable media storing instructions that, when executed by one or more processors, cause the one or more processors to perform a method according to any one of claims 1-10.

12. An apparatus, comprising:
one or more processors; and
one or more non-transitory computer-readable media storing instructions that, when executed by the one or more processors, cause the one or more processors to perform a method according to any one of claims 1-10.

13. An apparatus comprising means for performing a method according to any one of claims 1-10.
